# EUROPEAN PATENT APPLICATION

(11) **EP 4 848 842 A1**
(43) Date of publication of application: **02.12.2026**
(21) Application number: 25751159.2
(22) Date of filing: 20.01.2025
(51) Int. Cl.: H04W 60/00, H04W 48/16

(54) **COMMUNICATION METHOD AND APPARATUS**

(30) Priority: 08.02.2024 CN 202410178217
(71) Applicant: Huawei Technologies Co., Ltd., Shenzhen, Guangdong 518129 (CN)
(72) Inventor: XU, Shengfeng, Shenzhen, Guangdong 518129 (CN); SUN, Haiyang, Shenzhen, Guangdong 518129 (CN); XU, Yishan, Shenzhen, Guangdong 518129 (CN)
(74) Representative: Gill Jennings & Every LLP
(86) International application number: PCT/CN2025/073389
(87) International publication number: WO 2025/167557

(57) **Abstract**

This application provides a communication method and apparatus. The method includes: a second network element sends a public land mobile network priority list of a first terminal to a third network element, where the third network element is responsible for mobility management or access management of the first terminal; and when the first terminal is associated with a second terminal, sends second indication information to the third network element, where the second indication information indicates that the first terminal selects a public land mobile network different from a public land mobile network selected by the second terminal, and the public land mobile network selected by the first terminal belongs to the public land mobile network priority list of the first terminal. By using the foregoing method, the second indication information is sent to the first device, so that the first terminal and the second terminal can select different public land mobile networks. When the first terminal and the second terminal access different public land mobile networks, the first terminal and the second terminal can back up each other.

## Description

### CROSS-REFERENCE TO RELATED APPLICATIONS

This application claims priority to Chinese Patent Application No. 202410178217.5, filed with the China National Intellectual Property Administration on February 8, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With the development of communication technologies, a future mobile communication device may include two terminals (user equipments, UEs) or two universal subscriber identity modules (universal subscriber identity modules, USIMs). The mobile communication device may be connected to two radio access networks (radio access networks, RANs) respectively through the two UEs or the two USIMs. The mobile communication device transmits service data via the two RANs.

Currently, how the mobile communication device performs network selection is a problem worthy of attention.

### SUMMARY

Embodiments of this application provide a communication method and apparatus, to implement network selection by a mobile communication device including two UEs or two USIMs.

According to a first aspect, this application provides a communication method, applied to a first network element or an apparatus (such as a chip) having functions of a first network element. The method includes: receiving a first request message from a second network element, where the first request message is used to request network selection information of a first terminal, the first request message includes an identifier of the first terminal and first indication information, and the first indication information indicates that the first terminal is associated with a second terminal; determining a public land mobile network priority list of the first terminal based on the first indication information and a public land mobile network priority list of the second terminal, or determining a public land mobile network priority list of the first terminal based on the first indication information and an identifier of a second public land mobile network, where the second public land mobile network serves the second terminal; and sending a first response message to the second network element, where the first response message includes the public land mobile network priority list of the first terminal.

By using the foregoing design, the first network element may determine the public land mobile network priority list of the first terminal based on the first indication information and the public land mobile network priority list of the second terminal, or determine the public land mobile network priority list of the first terminal based on the first indication information and the identifier of the second public land mobile network, so that the first terminal and the second terminal select different public land mobile networks as much as possible. The first terminal and the second terminal may access different public land mobile networks, so that the first terminal and the second terminal can back up each other. For example, after the first terminal is disconnected from the accessed public land mobile network, data may be transferred to the public land mobile network accessed by the second terminal for transmission.

In a possible design, the first indication information includes an identifier of the second terminal.

In a possible design, before the public land mobile network priority list of the first terminal is determined based on the first indication information and the identifier of the second public land mobile network, the identifier of the second public land mobile network is received from the second network element.

In a possible design, the public land mobile network priority list of the second terminal is sent to the second network element.

In a possible design, the first terminal and the second terminal are included in a same DualSteer device.

According to a second aspect, this application provides a communication method, applied to a second network element or an apparatus (such as a chip) having functions of a second network element. The method includes: sending a first request message to a first network element, where the first request message is used to request network selection information of a first terminal, the first request message includes an identifier of the first terminal and first indication information, and the first indication information indicates that the first terminal is associated with the second terminal; and receiving a first response message from the first network element, where the first response message includes a public land mobile network priority list of the first terminal.

By using the foregoing design, the public land mobile network priority list, obtained from the first network element, of the first terminal enables the first terminal and the second terminal to select different public land mobile networks as much as possible. The first terminal and the second terminal may access different public land mobile networks, so that the first terminal and the second terminal can back up each other.

In a possible design, the first indication information includes an identifier of the second terminal.

In a possible design, an identifier of a second public land mobile network is sent to the first network element, where the second public land mobile network serves the second terminal.

In a possible design, a public land mobile network priority list of the second terminal is received from the first network element.

In a possible design, when a first public land mobile network is the same as a second public land mobile network, the first request message is sent to the first network element. The first public land mobile network serves the first terminal, and the second public land mobile network serves the second terminal.

By using the foregoing design, if the first public land mobile network is different from the second public land mobile network, the second network element may not need to send the first request message to the first network element; and when the first public land mobile network is the same as the second public land mobile network, the second network element sends the first request message to the first network element, to reduce signaling overheads.

In a possible design, the first terminal and the second terminal are included in a same DualSteer device.

According to a third aspect, this application provides a communication method, applied to a second network element or an apparatus (such as a chip) having functions of a second network element. The method includes: sending a public land mobile network priority list of a first terminal to a third network element, where the third network element is responsible for mobility management or access management of the first terminal; and when the first terminal is associated with a second terminal, sending second indication information to the third network element, where the second indication information indicates that the first terminal selects a public land mobile network different from a public land mobile network selected by the second terminal, and the public land mobile network selected by the first terminal belongs to the public land mobile network priority list of the first terminal.

By using the foregoing design, the second indication information is sent to the first device, so that the first terminal and the second terminal can select different public land mobile networks. The first terminal and the second terminal access different public land mobile networks, so that the first terminal and the second terminal can back up each other.

In a possible design, third indication information is sent to a fourth network element. The third indication information indicates that the second terminal preferentially selects the public land mobile network, or indicates that the second terminal is a primary terminal in a first device. The first terminal and the second terminal are included in the first device. The fourth network element is responsible for mobility management or access management of the second terminal.

By using the foregoing design, the third indication information is sent to the first device, so that the second terminal can select the public land mobile network before the first terminal.

According to a fourth aspect, this application provides a communication method, applied to a first device or an apparatus (such as a chip) having functions of a first device. The first device includes a first terminal and a second terminal. The method includes: receiving a public land mobile network priority list of the first terminal and second indication information, where the second indication information indicates that the first terminal selects a public land mobile network different from a public land mobile network selected by the second terminal; and determining a first public land mobile network from the public land mobile network priority list of the first terminal based on the second indication information and an identifier of a second public land mobile network, where the second public land mobile network is a public land mobile network selected by the second terminal, or the second public land mobile network serves the second terminal, and the first public land mobile network is different from the second public land mobile network.

By using the foregoing design, the first device determines, based on the second indication information and the identifier of the second public land mobile network selected by the second terminal, the first public land mobile network from the public land mobile network priority list of the first terminal. The first public land mobile network is different from the second public land mobile network, so that the first terminal and the second terminal can select different public land mobile networks. The first terminal and the second terminal access different public land mobile networks, so that the first terminal and the second terminal can back up each other.

In a possible design, fourth indication information is received, where the fourth indication information indicates whether the first public land mobile network supports a DualSteer capability; and when the fourth indication information indicates that the first public land mobile network does not support the DualSteer capability, a third public land mobile network is determined from the public land mobile network priority list of the first terminal, where the third public land mobile network is different from the second public land mobile network and is different from the first public land mobile network.

By using the foregoing design, the first device can learn whether the first public land mobile network supports the DualSteer capability, and reselect a public land mobile network when the first public land mobile network does not support the DualSteer capability.

In a possible design, third indication information is received, where the third indication information indicates that the second terminal preferentially selects the public land mobile network, or indicates that the second terminal is a primary terminal in the first device; a public land mobile network priority list of the second terminal is received; and the second public land mobile network is selected from the public land mobile network priority list of the second terminal based on the third indication information.

By using the foregoing design, the second terminal can select the public land mobile network based on the third indication information, and select the public land mobile network before the first terminal.

According to a fifth aspect, this application provides a communication method, applied to a second network element or an apparatus (such as a chip) having functions of a second network element. The method includes: sending fifth indication information to a third network element when a first terminal is associated with a second terminal and a first public land mobile network is the same as a second public land mobile network, where the first public land mobile network serves the first terminal, the second public land mobile network serves the second terminal, and the fifth indication information indicates that the first terminal reselects a public land mobile network, and/or indicates a type of a public land mobile network selected by the first terminal.

By using the foregoing design, when the first terminal and the second terminal select a same public land mobile network, either terminal of the first terminal or the second terminal is triggered to reselect a public land mobile network, and/or a type of the selected public land mobile network is indicated, so that the first terminal and the second terminal can select different public land mobile networks. The first terminal and the second terminal may access different public land mobile networks, so that the first terminal and the second terminal can back up each other.

In a possible design, the type of the public land mobile network is a visited public land mobile network or an equivalent public land mobile network.

According to a sixth aspect, this application provides a communication method, applied to a first terminal or an apparatus (such as a chip) having functions of a first terminal. The method includes: receiving fifth indication information, where the fifth indication information indicates that the first terminal reselects a public land mobile network, and/or indicates a type of a public land mobile network selected by the first terminal; and determining a fourth public land mobile network in a public land mobile network priority list of the first terminal based on the fifth indication information.

By using the foregoing design, the first terminal reselects a public land mobile network based on the fifth indication information, so that the first terminal and the second terminal select different public land mobile networks.

In a possible design, the type of the public land mobile network is a visited public land mobile network or an equivalent public land mobile network.

According to a seventh aspect, this application provides a communication method, applied to a first network element or an apparatus (such as a chip) having functions of a first network element. The method includes: receiving a second request message from a second network element, where the second request message is used to request network selection information of a first terminal, the second request message includes an identifier of the first terminal and first indication information, and the first indication information indicates that the first terminal is associated with a second terminal; determining an access technology priority list of the first terminal based on the first indication information and an access technology priority list of the second terminal; and sending a second response message to the second network element, where the second response message includes the access technology priority list of the first terminal.

By using the foregoing method, the first network element determines the access technology priority list of the first terminal based on the first indication information and the access technology priority list of the second terminal, so that the first terminal and the second terminal access a network or a same public land network by using different access technologies as much as possible. The first terminal and the second terminal that access a network by using different access technologies can back up each other.

In a possible design, the first indication information includes an identifier of the second terminal.

In a possible design, the access technology priority list of the second terminal is sent to the second network element.

In a possible design, the first terminal and the second terminal are included in a same DualSteer device.

In a possible design, an access technology in the access technology priority list of the first terminal and an access technology in the access technology priority list of the second terminal are used to access a same public land mobile network.

According to an eighth aspect, this application provides a communication method, applied to a second network element or an apparatus (such as a chip) having functions of a second network element. The method includes: sending a second request message to a first network element, where the second request message is used to request network selection information of a first terminal, the second request message includes an identifier of the first terminal and first indication information, and the first indication information indicates that the first terminal is associated with the second terminal; and receiving a second response message from the first network element, where the second response message includes an access technology priority list of the first terminal.

By using the foregoing method, the access technology priority list, obtained from the first network element, of the first terminal can enable the first terminal and the second terminal to access a network or a same public land network by using different access technologies as much as possible. The first terminal and the second terminal that access a network by using different access technologies can back up each other.

In a possible design, the first indication information includes an identifier of the second terminal.

In a possible design, the access technology priority list of the second terminal is received from the first network element.

In a possible design, the first terminal and the second terminal are included in a same DualSteer device.

In a possible design, an access technology in the access technology priority list of the first terminal and an access technology in the access technology priority list of the second terminal are used to access a same public land mobile network.

According to a ninth aspect, this application provides a communication method, applied to a second network element or an apparatus (such as a chip) having functions of a second network element. The method includes: when a first terminal is associated with a second terminal, determining a subscribed radio access technology/frequency selection priority index of the first terminal and a subscribed radio access technology/frequency selection priority index of the second terminal, where the subscribed radio access technology/frequency selection priority index of the first terminal is different from the subscribed radio access technology/frequency selection priority index of the second terminal; sending the subscribed radio access technology/frequency selection priority index of the first terminal to a third network element, where the third network element is responsible for mobility management or access management of the first terminal; and sending the subscribed radio access technology/frequency selection priority index of the second terminal to a fourth network element, where the fourth network element is responsible for mobility management or access management of the second terminal.

By using the foregoing method, when the first terminal is associated with the second terminal, the second network element may determine the subscribed radio access technology/frequency selection priority index of the first terminal and the subscribed radio access technology/frequency selection priority index of the second terminal that are different from each other. The first terminal and the second terminal access a network or a same public land network by using different access technologies as much as possible. Further, the first terminal and the second terminal that access a network by using different access technologies can back up each other.

According to a tenth aspect, this application provides a communication method, applied to a second network element or an apparatus (such as a chip) having functions of a second network element. The method includes: receiving first information from a third network element, where the first information indicates a first radio access technology/frequency selection priority index and/or a first access type, the first radio access technology/frequency selection priority index is a radio access technology/frequency selection priority index determined by the third network element for a first terminal, the first access type is an access type corresponding to an access network device accessed by the first terminal, and the third network element is responsible for mobility management or access management of the first terminal; when the first terminal is associated with a second terminal, determining a subscribed radio access technology/frequency selection priority index of the second terminal based on the first information; and sending the subscribed radio access technology/frequency selection priority index of the second terminal to a fourth network element, where the fourth network element is responsible for mobility management or access management of the second terminal.

By using the foregoing method, after the second network element obtains the first information, when the first terminal is associated with the second terminal, the second network element may determine the subscribed radio access technology/frequency selection priority index of the second terminal based on the first information. The first terminal and the second terminal access a network or a same public land network by using different access technologies as much as possible. Further, the first terminal and the second terminal that access a network by using different access technologies can back up each other.

In a possible design, when the subscribed radio access technology/frequency selection priority index of the second terminal is determined based on the first information, an initial subscribed radio access technology/frequency selection priority index of the second terminal is updated based on the first information, to determine the subscribed radio access technology/frequency selection priority index of the second terminal.

In a possible design, the first information indicates the first radio access technology/frequency selection priority index. Sixth indication information is sent to the third network element, where the sixth indication information is used to request the first information.

According to an eleventh aspect, this application provides a communication method, applied to a second network element or an apparatus (such as a chip) having functions of a second network element. The method includes: receiving first information from a third network element, where the first information indicates a first radio access technology/frequency selection priority index and/or a first access type, the first radio access technology/frequency selection priority index is a radio access technology/frequency selection priority index determined by the third network element for a first terminal, the first access type is an access type corresponding to an access network device accessed by the first terminal, and the third network element is responsible for mobility management or access management of the first terminal; and when the first terminal is associated with a second terminal, sending second information to a fourth network element, where the second information includes third information and/or a subscribed radio access technology/frequency selection priority index of the first terminal, and the third information is determined based on the first radio access technology/frequency selection priority index and/or the first access type; or the second information includes at least one of the first radio access technology/frequency selection priority index, the first access type, or a subscribed radio access technology/frequency selection priority index of the first terminal, and the fourth network element is responsible for mobility management or access management of the second terminal.

By using the foregoing method, after the second network element obtains the first information, when the first terminal is associated with the second terminal, the second network element may send the second information to a network element (that is, a fourth network) responsible for mobility management or access management of the second terminal, so that the fourth network element determines a radio access technology/frequency selection priority index for the second terminal based on the second information. The first terminal and the second terminal access a network or a same public land network by using different access technologies as much as possible. Further, the first terminal and the second terminal that access a network by using different access technologies can back up each other.

In a possible design, fourth information is received from the fourth network element, where the fourth information indicates a second radio access technology/frequency selection priority index and/or a second access type, the second radio access technology/frequency selection priority index is a radio access technology/frequency selection priority index determined by the fourth network element for the second terminal, and the second access type is an access type corresponding to an access network device accessed by the second terminal; and the second information is sent to the fourth network element when the first terminal is associated with the second terminal, and the first radio access technology/frequency selection priority is the same as the second radio access technology/frequency selection priority index and/or the first access type is the same as the second access type.

By using the foregoing design, when the radio access technology/frequency selection priority indexes corresponding to the first terminal and the second terminal are different or the access types are different, the second network element may not send the second information to the fourth network element; and when the radio access technology/frequency selection priority indexes corresponding to the first terminal and the second terminal are the same, and/or the access types are the same, the second network element sends the second information to the fourth network element, to reduce signaling overheads.

In a possible design, the subscribed radio access technology/frequency selection priority index of the second terminal is sent to the fourth network element.

In a possible design, the third information is determined based on the first radio access technology/frequency selection priority index and/or the first access type. If the first information includes the first access type, the third information includes a fourth access type, and the fourth access type is different from the first access type; and/or if the first information includes the first radio access technology/frequency selection priority index, the third information includes a fourth radio access technology/frequency selection priority index, and the fourth radio access technology/frequency selection priority index is different from the first radio access technology/frequency selection priority index.

By using the foregoing design, the third information may be an access type or a radio access technology/frequency selection priority index suggested or recommended by the fourth network element.

In a possible design, first indication information is sent to the fourth network element. The first indication information indicates that the first terminal is associated with the second terminal.

According to a twelfth aspect, this application provides a communication method, applied to a fourth network element or an apparatus (such as a chip) having functions of a fourth network element. The method includes:
receiving second information from a second network element, where the second information includes third information and/or a subscribed radio access technology/frequency selection priority index of a first terminal, and the third information is determined based on a first radio access technology/frequency selection priority index and/or a first access type; or the second information includes at least one of a first radio access technology/frequency selection priority index, a first access type, or a subscribed radio access technology/frequency selection priority index of a first terminal, where the first radio access technology/frequency selection priority index is a radio access technology/frequency selection priority index determined by a third network element for the first terminal, the first access type is an access type corresponding to an access network device accessed by the first terminal, and the third network element is responsible for mobility management or access management of the first terminal; determining a third radio access technology/frequency selection priority index based on a subscribed radio access technology/frequency selection priority index of the second terminal and the second information; and sending the third radio access technology/frequency selection priority index to an access network device accessed by the second terminal.

By using the foregoing method, the fourth network element may determine the radio access technology/frequency selection priority index for the second terminal based on the second information and the subscribed radio access technology/frequency selection priority index of the second terminal. The first terminal and the second terminal access a network or a same public land network by using different access technologies as much as possible. Further, the first terminal and the second terminal that access a network by using different access technologies can back up each other.

In a possible design, first indication information is received from the second network element. The first indication information indicates that the first terminal is associated with the second terminal. When the third radio access technology/frequency selection priority index is determined based on the subscribed radio access technology/frequency selection priority index of the second terminal and the second information, the third radio access technology/frequency selection priority index is determined based on the first indication information, the subscribed radio access technology/frequency selection priority index of the second terminal, and the second information.

By using the foregoing design, the fourth network element may learn that the first terminal is associated with the second terminal, and may determine the radio access technology/frequency selection priority index for the second terminal based on the first indication information, the second information, and the subscribed radio access technology/frequency selection priority index of the second terminal.

In a possible design, the third information is determined based on the first radio access technology/frequency selection priority index and/or the first access type. The third information includes a fourth access type, and the fourth access type is different from the first access type; and/or the third information includes a fourth radio access technology/frequency selection priority index, and the fourth radio access technology/frequency selection priority index is different from the first radio access technology/frequency selection priority index.

In a possible design, the subscribed radio access technology/frequency selection priority index of the second terminal is received from the second network element.

In a possible design, fourth information is sent to the second network element. The fourth information indicates a second radio access technology/frequency selection priority index and/or a second access type. The second radio access technology/frequency selection priority index is a radio access technology/frequency selection priority index determined by the fourth network element for the second terminal. The second access type is an access type corresponding to an access network device accessed by the second terminal.

According to a thirteenth aspect, this application provides a communication method, applied to a fifth network element or an apparatus (such as a chip) having functions of a fifth network element. The method includes: obtaining a subscribed radio access technology/frequency selection priority index of a second terminal and second information, where the second information includes third information and/or a subscribed radio access technology/frequency selection priority index of a first terminal, and the third information is determined based on a first radio access technology/frequency selection priority index and/or a first access type; or the second information includes at least one of a first radio access technology/frequency selection priority index, a first access type, or a subscribed radio access technology/frequency selection priority index of a first terminal, where the first radio access technology/frequency selection priority index is a radio access technology/frequency selection priority index determined by a third network element for the first terminal, the first access type is an access type corresponding to an access network device accessed by the first terminal, and the third network element is responsible for mobility management or access management of the first terminal; determining an authorized radio access technology/frequency selection priority index of a second terminal based on a subscribed radio access technology/frequency selection priority index of the second terminal and the second information; and sending the authorized radio access technology/frequency selection priority index of the second terminal to the fourth network element, where the fourth network element is responsible for mobility management or access management of the second terminal.

By using the foregoing method, after obtaining the subscribed radio access technology/frequency selection priority index of the second terminal and the second information, the fifth network element determines the authorized radio access technology/frequency selection priority index based on the subscribed radio access technology/frequency selection priority index of the second terminal and the second information. The first terminal and the second terminal access a network or a same public land network by using different access technologies as much as possible. Further, the first terminal and the second terminal that access a network by using different access technologies can back up each other.

In a possible design, first indication information is received from a second network element. The first indication information indicates that the first terminal is associated with the second terminal. When the authorized radio access technology/frequency selection priority index of the second terminal is determined based on the subscribed radio access technology/frequency selection priority index of the second terminal and the second information, the authorized radio access technology/frequency selection priority index of the second terminal is determined based on the first indication information, the subscribed radio access technology/frequency selection priority index of the second terminal, and the second information.

By using the foregoing design, the fifth network element may learn that the first terminal is associated with the second terminal, and may determine the authorized access technology/frequency selection priority index based on the first indication information, the second information, and the subscribed radio access technology/frequency selection priority index of the second terminal.

In a possible design, the third information is determined based on the first radio access technology/frequency selection priority index and/or the first access type. If the first information includes the first access type, the third information includes a fourth access type, and the fourth access type is different from the first access type; and/or if the first information includes the first radio access technology/frequency selection priority index, the third information includes a fourth radio access technology/frequency selection priority index, and the fourth radio access technology/frequency selection priority index is different from the first radio access technology/frequency selection priority index.

In a possible design, when the subscribed radio access technology/frequency selection priority index of the second terminal and the second information are obtained, the subscribed radio access technology/frequency selection priority index of the second terminal and the second information are received from the fourth network element.

In a possible design, when the subscribed radio access technology/frequency selection priority index of the second terminal and the second information are obtained, the subscribed radio access technology/frequency selection priority index of the second terminal is received from the fourth network element, and the second information is received from the second network element. The second network element is used for data management of the second terminal.

According to a fourteenth aspect, this application provides a communication apparatus. The communication apparatus may be a first apparatus, or may be a module or unit (for example, a chip, a chip system, or a circuit), in a first apparatus, that is in one-to-one correspondence with the methods/operations/steps/actions described in either one of the first aspect and the second aspect, or may be used in cooperation with the first apparatus.

According to a fifteenth aspect, this application provides a communication device. The communication device includes at least one processing element. At least one storage element is configured to store a program and data. The at least one processing element is configured to read and execute the program and the data that are stored in the storage element, so that the method according to any one of the foregoing aspects of this application is implemented.

In a possible design, the communication device further includes the at least one storage element.

According to a sixteenth aspect, this application further provides a computer program. When the computer program runs on a computer, the computer is enabled to perform the method according to any one of the foregoing aspects.

According to a seventeenth aspect, this application provides a communication apparatus. The apparatus includes an interface circuit and at least one processor. The interface circuit is configured to provide input and/or output of a program or instructions for the at least one processor. The at least one processor is configured to execute the program or the instructions, so that the communication apparatus can implement the method according to any one of the foregoing aspects.

In a possible manner, the communication apparatus includes the at least one memory, and the at least one memory is configured to store the program or the instructions.

According to an eighteenth aspect, this application provides a computer storage medium. The storage medium stores a software program. When the software program is read and executed by one or more processors, the method according to any one of the foregoing aspects may be implemented.

According to a nineteenth aspect, this application provides a computer program product including instructions. When the instructions are run on a computer, the computer is enabled to perform the method according to any one of the foregoing aspects.

According to a twentieth aspect, this application provides a chip system. The chip system includes at least one chip and a memory. The at least one chip is configured to read and execute a program stored in the memory, to implement the method according to any one of the foregoing aspects.

According to a twenty-first aspect, this application provides a communication system. The communication system includes one or more of a first network element, a second network element, a third network element, a fourth network element, a fifth network element, a first device, a first terminal, and a second terminal. The first network element is configured to perform the method according to either one of the first aspect or the seventh aspect, and the second network element is configured to perform the method according to any one of the second aspect, the third aspect, the fifth aspect, the eighth aspect, the ninth aspect, the tenth aspect, or the eleventh aspect. The fourth network element is configured to perform the method according to any implementation of the twelfth aspect. The fifth network element is configured to perform the method according to any implementation of the thirteenth aspect. The first device is configured to perform the method according to any implementation of the fourth aspect. The first terminal is configured to perform the method according to any implementation of the sixth aspect.

In this application, based on the implementations provided in the foregoing aspects, the implementations may further be combined to provide more implementations.

### BRIEF DESCRIPTION OF DRAWINGS

FIG. 1 is a diagram of a 5G network architecture of a service-based architecture;
FIG. 2 is a diagram of obtaining an RFSP index by a RAN;
FIG. 3 is a diagram in which a DualSteer device is separately connected to different RANs through two terminals;
FIG. 4 is a diagram of a communication method corresponding to Embodiment 1;
FIG. 5 is a diagram of a communication method corresponding to Embodiment 2;
FIG. 6 is a diagram of a communication method corresponding to Embodiment 3;
FIG. 7 is a diagram of a communication method corresponding to Embodiment 4;
FIG. 8 is a diagram of a communication method corresponding to Embodiment 5;
FIG. 9 is a diagram of a communication method corresponding to Embodiment 6;
FIG. 10 is a diagram of a communication method corresponding to Embodiment 7;
FIG. 11 is a diagram of a communication method corresponding to Embodiment 8;
FIG. 12 is a diagram of a communication method corresponding to Embodiment 9;
FIG. 13 is a diagram of a communication apparatus; and
FIG. 14 is a diagram of another communication apparatus.

### DESCRIPTION OF EMBODIMENTS

The following describes implementations of this application by using examples with reference to the accompanying drawings in embodiments of this application. However, implementations of this application may further include a combination of the embodiments without departing from the spirit or scope of this application. For example, other embodiments may be used and structural changes may be made. Therefore, the detailed description of the following embodiments should not be understood in a restrictive sense. Terms used in embodiments of this application are merely used to describe specific embodiments of this application, but are not intended to limit this application.

Embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, and a 5th generation (5th generation, 5G) system or new radio (new radio, NR), or be applied to a future communication system, another similar communication system, or the like.

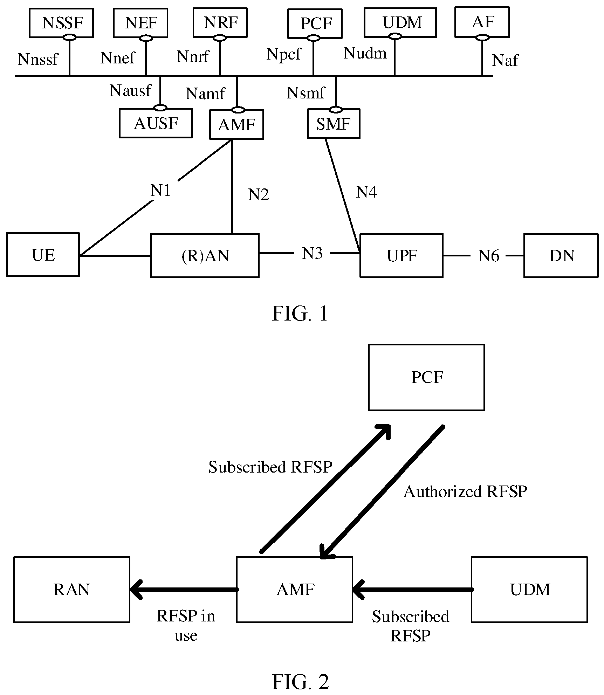

FIG. 1 is a diagram of a 5G network architecture of a service-based architecture. The 5G network architecture shown in FIG. 1 may include a terminal device, an access network device, and a core network device. The terminal device accesses a data network (data network, DN) through the access network device and the core network device. The core network device includes a plurality of network functions (network functions, NFs) or network elements, for example, includes a part or all of the following network elements: a unified data management (unified data management, UDM) network element, a unified data repository (unified data repository, UDR) network element, an application function (application function, AF) network element, a policy control function (policy control function, PCF) network element, an access and mobility management function (access and mobility management function, AMF) network element, a session management function (session management function, SMF) network element, a user plane function (user plane function, UPF) network element, a network repository function (network repository function, NRF) network element, a network slice selection function (Network Slice Selection Function, NSSF) network element, an authentication server function (Authentication Server Function, AUSF) network element, and the like.

The access network device may be a radio access network (radio access network, RAN) device. For example, the radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6th generation (6th generation, 6G) mobile communication system, a base station in a future mobile communication system, an access node in a wireless fidelity (wireless fidelity, Wi-Fi) system, or the like. Alternatively, the radio access network device may be a module or a unit that completes a part of functions of a base station, for example, a central unit (central unit, CU) or a distributed unit (distributed unit, DU). The radio access network device may be a macro base station, may be a micro base station or an indoor base station, or may be a relay node, a donor node, or the like. A specific technology and a specific device form used by the radio access network device are not limited in embodiments of this application.

The terminal device may be a user equipment (user equipment, UE), a mobile station, a mobile terminal, or the like. The terminal device may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, and smart city. The terminal device may be a mobile phone, a tablet computer, a computer having wireless transmission and reception functions, a wearable device, a vehicle, an urban air transportation means (like an uncrewed aerial vehicle or a helicopter), a ship, a robot, a mechanical arm, a smart home device, or the like.

The access network device and the terminal device may be at fixed locations, or may be movable. The access network device and the terminal device may be deployed on land, including indoors or outdoors, or may be handheld or vehicle-mounted; or may be deployed on a water surface; or may be deployed on a plane, a balloon, or an artificial satellite in the air. Application scenarios of the access network device and the terminal device are not limited in embodiments of this application.

The following briefly describes some core network devices.

The AMF network element, AMF for short, includes functions such as mobility management, and access authentication/authorization. In addition, the AMF network element is also responsible for transport of a user policy between the terminal device and the PCF.

The SMF network element, SMF for short, includes functions such as execution of session management, execution of a control policy delivered by the PCF, UPF selection, and internet protocol (internet protocol, IP) address allocation for the terminal device.

The UPF network element, UPF for short, is used as an interface to the data network, and includes functions such as completion of user plane data forwarding, session/flow-level based charging statistics collection, and bandwidth limitation.

The UDM network element, UDM for short, includes functions such as subscription data management, and user access authorization.

The UDR network element, UDR for short, includes functions such as storage and retrieval of subscription data, policy data, application data, and other types of data.

The NEF network element, NEF for short, is used to support capability and event exposure.

The AF network element, AF for short, transfers a requirement of an application side for a network side, for example, a quality of service (quality of service, QoS) requirement or user status event subscription. The AF may be a third-party functional entity or an application server deployed by an operator.

The PCF network element, PCF for short, includes policy control functions such as session-level or service flow-level charging, QoS bandwidth guarantee, mobility management, and terminal device policy decision-making.

The NRF network element, NRF for short, may be configured to provide a network element discovery function, and provide, based on a request of another network element, network element information corresponding to a network element type. The NRF network element further provides a network element management service, for example, network element registration, update, and deregistration, and network element status subscription and push.

The NSSF network element is mainly responsible for network slice selection, and determines, based on slice selection assistance information, subscription information, and the like of the terminal, a network slice instance that the terminal is allowed to access.

The AUSF network element supports the 3rd generation partnership project (3rd generation partnership project, 3GPP) and non-3GPP access authentication.

It may be understood that the foregoing network elements are an example of an implementation. This application does not exclude that a network element or a device having functions of the foregoing network element has another name or another form in a 6G wireless communication system or an updated wireless communication system.

It may be understood that the foregoing network elements or functions may be network elements in a hardware device, software functions running on dedicated hardware, or virtualized functions instantiated on a platform (for example, a cloud platform). In a possible implementation method, the foregoing network elements or functions may be implemented by one device, or may be jointly implemented by a plurality of devices, or may be implemented by one functional module in one device. This is not specifically limited in embodiments of this application.

In this application, network selection includes public land mobile network (public land mobile network, PLMN) selection and/or radio access technology (radio access technology, RAT) selection.

The following briefly describes selection of an existing network.

### I. PLMN selection

First, after a terminal is started, whether the terminal has a SIM card needs to be first determined. If the terminal has no SIM card or the SIM card of the terminal is unavailable, the terminal is in a no SIM (NO SIM) state. In this case, network selection can be performed only when the SIM card is available.

If the SIM card of the terminal is currently available, the terminal needs to determine whether the terminal has a registered PLMN (registered PLMN, RPLMN), that is, a PLMN registered last time. When the terminal has the RPLMN, the terminal preferentially attempts to initiate registration from the RPLMN. Information about the RPLMN may be stored in the SIM card or stored in the terminal.

If the terminal selects the RPLMN, the terminal attempts to register with the RPLMN. If the registration succeeds, the terminal learns of a specific selected PLMN and enters an ON PLMN (ON PLMN) state.

If the terminal has no RPLMN or fails in registering with the RPLMN, the terminal performs network selection based on a network selection list and sequentially attempts to perform registration based on priorities of the network selection list. If the registration succeeds, the terminal enters an ON PLMN state. If the registration fails and there is a remaining network that has not been attempted in the network selection list, the terminal attempts to perform registration based on the network selection list. If the registration fails and no network is available in the network selection list, the terminal determines whether there is an available PLMN currently. If there is an available PLMN currently, the terminal attempts to perform registration. If there is no available PLMN currently, the terminal enters a waiting state.

When the terminal is in the ON PLMN state, network reselection may be triggered in the following cases:

1. If the terminal currently accesses a visited PLMN (visited PLMN, VPLMN), the terminal periodically performs network reselection. After one period ends, the terminal searches for a network with a higher priority. If there is no network with a higher priority, the terminal maintains the current ON PLMN state. If there is a network with a higher priority, the terminal selects the network with the higher priority to attempt to access.

2. When the terminal is out of coverage of a network currently accessed by the terminal, the terminal determines whether there is an available network for access currently. If there is an available network, the terminal selects the network based on a priority. If there is no available network, the terminal enters a waiting state. If a network in previous registration is available currently, the terminal resumes the ON PLMN state. If there is another available network, the terminal selects, based on a priority, the network for access.

3. A user may manually trigger network reselection. In this case, the terminal adds a network in previous registration to a list of temporarily forbidden networks, and then reselects a network based on the network selection list.

4. If the terminal receives a roaming forbidden indication and the terminal currently accesses a VPLMN, the terminal is triggered to perform network reselection.

For example, the network selection list may be an operator controlled PLMN selector with access technology (Operator Controlled PLMN Selector with Access Technology). As shown in Table 1, 1^{st} represents a PLMN with a highest priority, and an access technology (access technology) is used by the terminal to determine a specific type of a wireless carrier to be used to search for a corresponding PLMN. The access technology may be specifically a RAT type (type). For example, the RAT type may include evolved universal terrestrial radio access (evolved universal terrestrial radio access, E-UTRA), 5G NR, 5G NR (satellite), and 6G RAT. M is the abbreviation of mandatory and means mandatory, and O is the abbreviation of optional and means optional.

**Table 1**

| Bytes (bytes) | Description (description) | M/O | Length (length) (unit: bytes) |
|---|---|---|---|
| 1 to 3 | 1^{st} PLMN | M | 3 |
| 4 and 5 | 1^{st} PLMN access technology identifier | M | 2 |
| ... | ... | ... | ... |
| 36 to 38 | 8^{th} PLMN | M | 3 |
| 39 and 40 | 8^{th} PLMN access technology identifier | M | 2 |
| 41 to 43 | 9^{th} PLMN | O | 3 |
| 44 and 45 | 9^{th} PLMN access technology identifier | O | 2 |
| ... | ... | ... | ... |
| (5n-4) to (5n-2) | N^{th} PLMN | O | 3 |
| (5n-1) and 5n | N^{th} PLMN access technology identifier | O | 2 |

The terminal may obtain the network selection list through a steering of roaming (steering of roaming, SOR) procedure. The SOR procedure may be classified into two types: an SOR procedure initiated in a registration procedure and an SOR procedure triggered after a registration procedure.
(1) SOR procedure initiated in a terminal registration procedure: If subscription information of a user indicates that SOR is triggered when the terminal initially registers with a VPLMN, a home PLMN (home PLMN, HPLMN) UDM triggers an SOR procedure, or an HPLMN UDM may trigger an SOR procedure based on an operator policy, when the terminal initially registers with the VPLMN. The HPLMN UDM provides, by using an AMF, SOR for the terminal when the terminal registers with the VPLMN. SOR includes a network selection list of the terminal. The HPLMN UDM may obtain the network selection list of the terminal from a steering of roaming application function (Steering of Roaming Application Function, SOR AF). The terminal performs security verification on the received network selection list; and if the verification succeeds, performs network selection again based on the received network selection list, and selects a network with a high priority for access.
(2) SOR procedure triggered after a registration procedure: An HPLMN UDM obtains an updated network selection list. For example, an SOR AF sends the updated network selection list to the HPLMN UDM; or the HPLMN UDM requests the updated network selection list from an SOR AF, and the SOR AF sends the updated network selection list to the HPLMN UDM. The HPLMN UDM sends the updated network selection list to a terminal by using an AMF. The terminal performs security verification on the received network selection list. If the verification succeeds, the terminal uploads the network selection list to a USIM card, or replaces a network selection list stored in the terminal device.

### II. RAT selection

(1) A terminal determines a RAT based on a network selection list.
   When the terminal searches for a PLMN, a network (for example, a RAN) may control an access technology (access technology), so that the terminal determines a specific type of a wireless carrier to be used to search for a corresponding PLMN. For example, as shown in Table 1, when the terminal searches for the 1^{st} PLMN, if a priority of E-UTRA is higher than that of 5G NR, the terminal first searches for a wireless carrier corresponding to E-UTRA and then searches for a wireless carrier corresponding to 5G NR. If the wireless carrier (for example, a synchronization signal) corresponding to E-UTRA is found, the terminal accesses the 1^{st} PLMN by using a radio access network device corresponding to E-UTRA; or otherwise, the terminal continues to search for the radio carrier corresponding to 5G NR.
(2) A RAN determines a RAT based on a RFSP.
   An AMF provides a RAT/frequency selection priority (RAT/Frequency selection priority, RFSP) index (index) for a RAN, and the RAN maps the RFSP index to a local management policy, for example, steers a terminal in a connected state to another frequency or a different RAT, or preferentially camps a terminal in an idle state on a specific frequency or a specific RAT. The RFSP index (or referred to as an RFSP index value) may be understood as a RAT priority. For example, RFSP#1 indicates that E-UTRA is prioritized over 5G NR (that is, E-UTRA is preferentially accessed), and RFSP#2 indicates that 5G NR is prioritized over E-UTRA (that is, 5G NR is preferentially accessed).

For example, with reference to FIG. 2, the RAN may obtain the RFSP index in the following two manners:
Manner 1: In a terminal registration process, an AMF obtains a subscribed RFSP index (subscribed RFSP Index) of a terminal from a UDM. The AMF may set the subscribed RFSP index to an RFSP index in use (RFSP Index in use), or the AMF generates an RFSP index in use based on configuration of a local operator and a subscribed RFSP index. The AMF sends the RFSP index in use to a RAN connected to the terminal.

Manner 2: In a terminal registration process, an AMF obtains a subscribed RFSP index of a terminal from a UDM. The AMF sends the subscribed RFSP index to a PCF. The PCF may determine an authorized RFSP index (authorized RFSP index) based on the subscribed RFSP index at any time. For example, when 5G NR is currently congested, to control the terminal to preferentially access E-UTRA, the PCF may set the subscribed RFSP index to RFSP#1. For example, RFSP#1 indicates that E-UTRA is prioritized over 5G NR (that is, E-UTRA is preferentially accessed). The PCF sends the authorized RFSP index to the AMF. The AMF sets the authorized RFSP index to an RFSP index in use, or the AMF generates an RFSP index in use based on configuration of a local operator and the authorized RFSP index. The AMF sends the RFSP index in use to a RAN connected to the terminal.

The following embodiments are described by using only two terminals (that is, a first terminal and a second terminal) as an example. It may be understood that the following embodiments are further applicable to a scenario in which three or more terminals are associated. Details are not described herein.

For example, the first terminal and the second terminal may be included in a same device. For example, the device is a DualSteer (Dual Steer) device, and the device has a DualSteer capability. Alternatively, the first terminal and the second terminal are devices of a same user, for example, a mobile phone of a user A and a vehicle terminal of the user A, or a mobile phone of a user B and a tablet computer of the user B. Alternatively, the first terminal and the second terminal respectively correspond to two SIM cards in a same mobile communication device.

The first terminal and the second terminal are respectively connected to two different access network devices, for example, two different RANs, and can transmit data via the two access network devices.

For example, description is provided by using an example in which two different access network devices are a RAN 1 and a RAN 2. For example, both the RAN 1 and the RAN 2 are of a 3GPP access type (3GPP access type), and the RAN 1 and the RAN 2 have a same RAT type or different RAT types. For example, the RAT type may be E-UTRA, 5G NR, 5G NR (satellite), or 6G RAT. 5G NR (satellite) may be further classified into a low earth orbit (low earth orbit, LEO), a medium earth orbit (medium earth orbit, MEO), and a geostationary earth orbit (geostationary earth orbit, GEO).

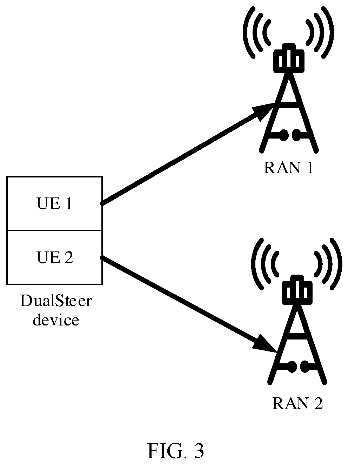

For example, as shown in FIG. 3, a DualSteer device includes two terminals (for example, a first terminal UE 1 and a second terminal UE 2), the UE 1 is connected to a RAN 1, and the UE 2 is connected to a RAN 2. The UE 1 and the UE 2 can access a same PLMN or different PLMNs. HPLMNs of the UE 1 and the UE 2 may be the same or different. Therefore, the DualSteer device is separately connected to different RANs through the two terminals.

In this embodiment of this application, description is provided by using the two terminals (for example, the UE 1 and the UE 2) included in the DualSteer device as an example. The two terminals may be two devices/apparatuses. Alternatively, the two UEs included in the DualSteer device may be two USIMs, for example, the UE 1 may be a first USIM, and the UE 2 may be a second USIM. Alternatively, the DualSteer device is a terminal, the terminal includes two USIMs, the UE 1 corresponds to a first USIM, and the UE 1 corresponds to a second USIM. Correspondingly, in this embodiment of this application, the DualSteer device may be replaced with a terminal, the UE may be replaced with a USIM, the UE 1 may be replaced with the first USIM, and the UE 2 may be replaced with the second USIM. Alternatively, the DualSteer device is a terminal, the terminal includes at least two protocol stacks (Stacks), the UE 1 is replaced with a protocol stack 1, and the UE 2 is replaced with a protocol stack 2.

The DualSteer device indicates that the device has a DualSteer capability. DualSteer means that service data of the device may be steered to the UE 1 or the UE 2 for transmission, or may be switched from the UE 1 for transmission to the UE 2 for transmission.

In the following embodiments, a first network element may store network selection information of the first terminal and the second terminal. For example, the first network element may be an SOR AF or another network element. This is not limited in this application. A second network element may store association between the first terminal and the second terminal. For example, the second network element stores association between an identifier of the first terminal (for example, the identifier of the first terminal is user subscription permanent identifier (subscription permanent identifier, SUPI)#1) and an identifier of the second terminal (for example, the identifier of the second terminal is SUPI#2). For example, in a process in which the operator registers the first terminal and the second terminal, the association between the two terminals exists. Therefore, the second network element may store the association between SUPI#1 and SUPI#2. Alternatively, the second network element may store the first terminal and the second terminal allowing DualSteer or supporting DualSteer. For another example, the first terminal and the second terminal are separately associated with a user identity, so that the first terminal is associated with the second terminal. For another example, the first terminal and the second terminal are separately associated with an identifier of the DualSteer device, so that the first terminal is associated with the second terminal. For example, the second network element is configured to manage data or subscription data of the first terminal and the second terminal. For example, the second network element may be a UDM or another network element. This is not limited in this application. A third network element may be responsible for access management and/or mobility management of the first terminal. For example, the third network element is an AMF 1 or another network element. This is not limited in this application. The third network element may store the identifier of the first terminal, for example, SUPI#1. A fourth network element may be responsible for access management and/or mobility management of the second terminal. For example, the fourth network element is an AMF 2 or another network element. This is not limited in this application. The fourth network element stores the identifier of the second terminal, for example, SUPI#2. A fifth network element may be configured to determine an authorized RFSP of a terminal or perform access policy management of the second terminal. For example, the fifth network element is a PCF or another network element. This is not limited in this application.

For ease of description, in the following embodiments, the first terminal accesses the RAN 1, and the second terminal accesses the RAN 2. The first network element is the SOR AF. In addition, the SOR AF may alternatively be replaced with a communication apparatus having an SOR AF function, or a chip, a unit, or a module in a communication apparatus having an SOR AF function. The second network element is the UDM. In addition, the UDM may alternatively be replaced with a communication apparatus having a UDM function, or a chip, a unit, or a module in a communication apparatus having a UDM function. The third network element is the AMF 1. In addition, the AMF 1 may alternatively be replaced with a communication apparatus having an AMF 1 function, or a chip, a unit, or a module in a communication apparatus having an AMF 1 function. The fourth network element is the AMF 2. In addition, the AMF 2 may alternatively be replaced with a communication apparatus having an AMF 2 function, or a chip, a unit, or a module in a communication apparatus having an AMF 2 function. The fifth network element is the PCF. In addition, the PCF may alternatively be replaced with a communication apparatus having a PCF function, or a chip, a unit, or a module in a communication apparatus having a PCF function. Based on the foregoing scenario, how two associated terminals that access different access network devices perform network selection is a problem worthy of attention. To resolve this problem, embodiments of this application provide several possible communication methods, so that two different terminals can back up each other.

### Embodiment 1:

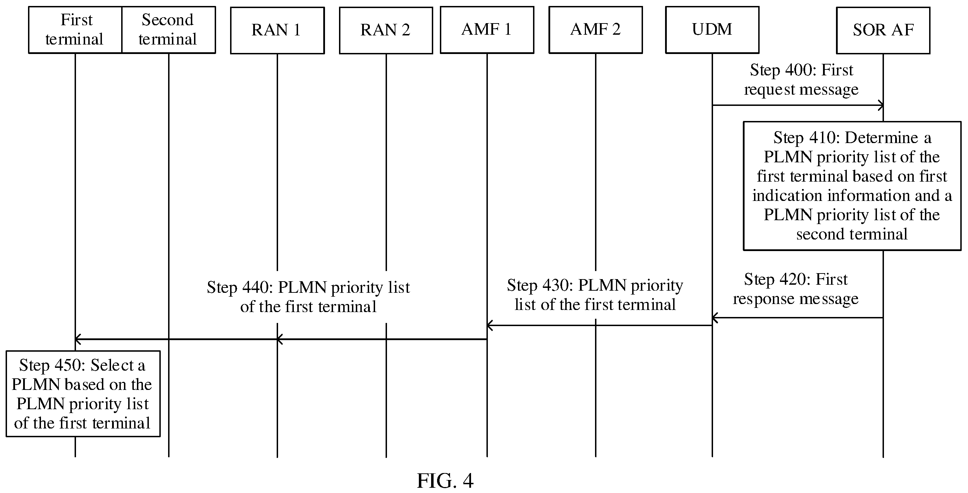

As shown in FIG. 4, this application provides a communication method. The method includes the following steps.

Step 400: A UDM sends a first request message to an SOR AF. Correspondingly, the SOR AF receives the first request message from the UDM.

The first request message is used to request network selection information of a first terminal. The first request message includes an identifier of the first terminal and first indication information. The first indication information indicates that the first terminal is associated with a second terminal. The identifier of the first terminal may be an SUPI of the first terminal.

The first indication information indicates that the first terminal is associated with the second terminal, or the first indication information indicates that the first terminal and the second terminal allow DualSteer or support DualSteer, or the first indication information indicates that the first terminal and the second terminal are included in a same device. For example, the first indication information may be DualSteer allowed (DualSteer authorized or DualSteer allowed).

Optionally, the first request message being used to request the network selection information of the first terminal may be replaced with the first request message being used to request to update a network selection list of the first terminal, or the first request message being used to request a network selection list of the first terminal.

Optionally, the UDM sends the first request message to the SOR AF only when the first terminal and the second terminal allow DualSteer or support DualSteer.

Optionally, the UDM sends the first request message to the SOR AF only when the first terminal is associated with the second terminal.

For example, the first indication information may include an identifier of the second terminal, for example, an SUPI of the second terminal. Correspondingly, the first request message includes the identifier of the first terminal and the identifier of the second terminal.

For example, the first request message is an SOR get request (SOR get request).

In a possible application scenario, the second terminal first registers with a network, and then the first terminal registers with the network. In a registration procedure of the first terminal, the UDM sends the first request message to the SOR AF.

In another possible application scenario, both the first terminal and the second terminal have accessed respective corresponding networks. A first PLMN serves the first terminal, and a second PLMN serves the second terminal. When the first PLMN is the same as the second PLMN, the UDM sends the first request message to the SOR AF. The first PLMN is the same as the second PLMN, that is, a PLMN selected by the second terminal is the same as a PLMN selected by the first terminal, or a PLMN that serves the second terminal is the same as a PLMN that serves the first terminal, or a network accessed by the second terminal is the same as a network accessed by the first terminal. Herein, description is provided by using only an example in which the UDM requests the network selection information of the first terminal from the SOR AF. In addition, this may also be replaced with a case in which the UDM requests network selection information of the second terminal from the SOR AF. A procedure is similar, and details are not described again.

For example, after the first terminal accesses the first PLMN, an AMF 1 may send, to the UDM, an identifier of the network currently accessed by the first terminal, that is, the identifier of the PLMN that serves the first terminal, namely, the identifier of the first PLMN. After the second terminal accesses the second PLMN, an AMF 2 may send, to the UDM, an identifier of the network currently accessed by the second terminal, that is, the identifier of the PLMN that serves the second terminal, namely, the identifier of the second PLMN. The UDM may determine whether the first PLMN is the same as the second PLMN. If the first PLMN is the same as the second PLMN, the UDM sends the first request message to the SOR AF.

Step 410: The SOR AF determines a PLMN priority list of the first terminal based on the first indication information and a PLMN priority list of the second terminal.

Optionally, the PLMN priority list may be replaced with a network selection list.

For example, the SOR AF determines, based on the first indication information, that the first terminal is associated with the second terminal, and then determines the PLMN priority list of the first terminal based on the PLMN priority list of the second terminal.

In an example, if the first indication information includes the identifier of the second terminal, the SOR AF may query the PLMN priority list of the second terminal based on the identifier of the second terminal, and determine the PLMN priority list of the first terminal based on the PLMN priority list of the second terminal, so that the PLMN priority list of the first terminal is different from the PLMN priority list of the second terminal.

For example, the PLMN priority list of the first terminal being different from the PLMN priority list of the second terminal may indicate that a PLMN with a highest priority in the PLMN priority list of the first terminal is different from a PLMN with a highest priority in the PLMN priority list of the second terminal.

For example, in the PLMN priority list of the first terminal, a priority of a PLMN 1 is higher than a priority of a PLMN 2; and in the PLMN priority list of the second terminal, a priority of the PLMN 2 is higher than a priority of the PLMN 1. Types of the PLMN 1 and the PLMN 2 may be the same or different. For example, both the PLMN 1 and the PLMN 2 may be HPLMNs, or both the PLMN 1 and the PLMN 2 may be VPLMNs, or the PLMN 2 is an HPLMN and the PLMN 1 is a VPLMN.

For another example, in the PLMN priority list of the first terminal, a priority of a VPLMN is higher than a priority of an HPLMN; and in the PLMN priority list of the second terminal, a priority of the HPLMN is higher than a priority of the VPLMN.

In addition, the SOR AF may further update the PLMN priority list of the second terminal, or the SOR AF may not need to update the PLMN priority list of the second terminal.

Step 420: The SOR AF sends a first response message to the UDM. Correspondingly, the UDM receives the first response message from the SOR AF.

The first response message includes the PLMN priority list of the first terminal.

Optionally, if the SOR AF further updates the PLMN priority list of the second terminal, the SOR AF may further send an updated PLMN priority list of the second terminal to the UDM. The PLMN priority list of the second terminal may also be included in the first response message, or may be separately sent. This is not limited in this application.

Further, step 430: The UDM sends the PLMN priority list of the first terminal to the AMF 1. Correspondingly, the AMF 1 receives the PLMN priority list of the first terminal from the UDM.

Optionally, if the SOR AF further sends the PLMN priority list of the second terminal to the UDM, the UDM may further send the PLMN priority list of the second terminal to the AMF 2. Further, the AMF 2 sends the PLMN priority list of the second terminal to the second terminal by using a RAN 2, and the second terminal may reselect a PLMN based on the PLMN priority list of the second terminal.

Step 440: The AMF 1 sends the PLMN priority list of the first terminal to the first terminal by using a RAN 1. Correspondingly, the first terminal receives the PLMN priority list of the first terminal.

Step 450: The first terminal selects a PLMN based on the PLMN priority list of the first terminal.

For example, when the PLMN with the highest priority in the PLMN priority list of the first terminal is the PLMN 1, and the PLMN with the highest priority in the PLMN priority list of the second terminal is the PLMN 2, the first terminal preferentially attempts to access the PLMN 1 based on the PLMN priority list of the first terminal, and the second terminal preferentially attempts to access the PLMN 2 based on the PLMN priority list of the second terminal.

By using the foregoing design, the first terminal and the second terminal may select different PLMNs as much as possible, and the first terminal and the second terminal access different PLMNs, so that the first terminal and the second terminal can back up each other. For example, after the first terminal is disconnected from the accessed first PLMN, data may be transferred to the second PLMN accessed by the second terminal for transmission.

### Embodiment 2:

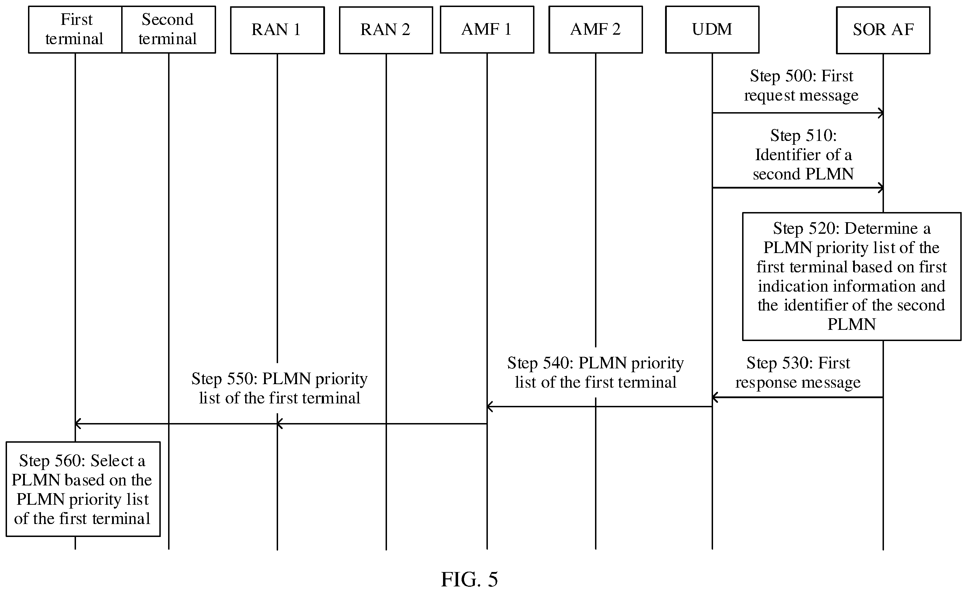

As shown in FIG. 5, this application provides a communication method. The method includes the following steps.

Step 500: A UDM sends a first request message to an SOR AF. The first request message is used to request network selection information of a first terminal. The first request message includes an identifier of the first terminal and first indication information. The first indication information indicates that the first terminal is associated with a second terminal.

For the first indication information, refer to the related descriptions of the first indication information in step 400. Details are not described herein again.

Step 510: The UDM sends an identifier of a second PLMN to the SOR AF. The second PLMN serves the second terminal.

It may be understood that the identifier of the second PLMN may be further carried in the first request message, or may be separately sent. This is not limited in this application.

In a possible application scenario, the second terminal first registers with a network, and then the first terminal registers with the network. After the second terminal accesses the second PLMN, an AMF 2 may send, to the UDM, an identifier of the network currently accessed by the second terminal, that is, the identifier of the PLMN that serves the second terminal, namely, the identifier of the second PLMN. The UDM may send the first request message to the SOR AF. The first request message includes the identifier of the first terminal, the first indication information, and the identifier of the second PLMN.

In another possible application scenario, both the first terminal and the second terminal have accessed respective corresponding networks. A first PLMN serves the first terminal, and the second PLMN serves the second terminal. When the first PLMN is the same as the second PLMN, the UDM sends the first request message to the SOR AF. The first request message includes the identifier of the first terminal, the first indication information, and the identifier of the second PLMN. The first PLMN is the same as the second PLMN, that is, a PLMN selected by the second terminal is the same as a PLMN selected by the first terminal, or a PLMN that serves the second terminal is the same as a PLMN that serves the first terminal, or a network accessed by the second terminal is the same as a network accessed by the first terminal.

For example, after the first terminal accesses the first PLMN, an AMF 1 may send, to the UDM, an identifier of the network currently accessed by the first terminal, that is, the identifier of the PLMN that serves the first terminal, namely, the identifier of the first PLMN. After the second terminal accesses the second PLMN, an AMF 2 may send, to the UDM, an identifier of the network currently accessed by the second terminal, that is, the identifier of the PLMN that serves the second terminal, namely, the identifier of the second PLMN. The UDM may determine whether the first PLMN is the same as the second PLMN. If the first PLMN is the same as the second PLMN, the UDM sends the first request message to the SOR AF. The first request message includes the identifier of the first terminal, the first indication information, and the identifier of the second PLMN.

Step 520: The SOR AF determines a PLMN priority list of the first terminal based on the first indication information and the identifier of the second PLMN. The second PLMN serves the second terminal.

Optionally, the PLMN priority list may be replaced with a network selection list.

For example, a PLMN with a highest priority in the PLMN priority list of the first terminal is not the second PLMN, or a priority of the second PLMN in the PLMN priority list of the first terminal is low.

Optionally, step 510 may be replaced with the following: The UDM sends a type of the second PLMN (for example, an HPLMN, a VPLMN, or an EPLMN) to the SOR AF, where the UDM determines the type of the second PLMN based on the identifier of the second PLMN. Correspondingly, step 520 may be replaced with the following: The SOR AF determines the PLMN priority list of the first terminal based on the first indication information and the type of the second PLMN. For example, if the type of the second PLMN is an HPLMN, a PLMN with a highest priority in the PLMN priority list of the first terminal is not the HPLMN, or a priority of an HPLMN in the PLMN priority list of the first terminal is lower than that of a PLMN in another type (for example, a VPLMN).

In addition, the SOR AF may further update the PLMN priority list of the second terminal, or the SOR AF may not need to update the PLMN priority list of the second terminal.

Step 530: The SOR AF sends a first response message to the UDM. Correspondingly, the UDM receives the first response message from the SOR AF.

The first response message includes the PLMN priority list of the first terminal.

Optionally, if the SOR AF further updates the PLMN priority list of the second terminal, the SOR AF may further send an updated PLMN priority list of the second terminal to the UDM. The PLMN priority list of the second terminal may also be included in the first response message, or may be separately sent. This is not limited in this application.

Further, step 540: The UDM sends the PLMN priority list of the first terminal to the AMF 1. Correspondingly, the AMF 1 receives the PLMN priority list of the first terminal from the UDM.

Optionally, if the SOR AF further sends the PLMN priority list of the second terminal to the UDM, the UDM may further send the PLMN priority list of the second terminal to the AMF 2. Further, the AMF 2 sends the PLMN priority list of the second terminal to the second terminal by using a RAN 2, and the second terminal may reselect a PLMN based on the PLMN priority list of the second terminal.

Step 550: The AMF 1 sends the PLMN priority list of the first terminal to the first terminal by using a RAN 1. Correspondingly, the first terminal receives the PLMN priority list of the first terminal.

Step 560: The first terminal selects a PLMN based on the PLMN priority list of the first terminal.

For example, a PLMN that serves the second terminal is a PLMN 2, the PLMN with the highest priority in the PLMN priority list of the first terminal is a PLMN 1, and the PLMN1 is different from the PLMN2. The first terminal preferentially attempts to access the PLMN 1 based on the PLMN priority list of the first terminal.

By using the foregoing design, the first terminal and the second terminal may select different PLMNs as much as possible, and the first terminal and the second terminal access different PLMNs, so that the first terminal and the second terminal can back up each other.

### Embodiment 3:

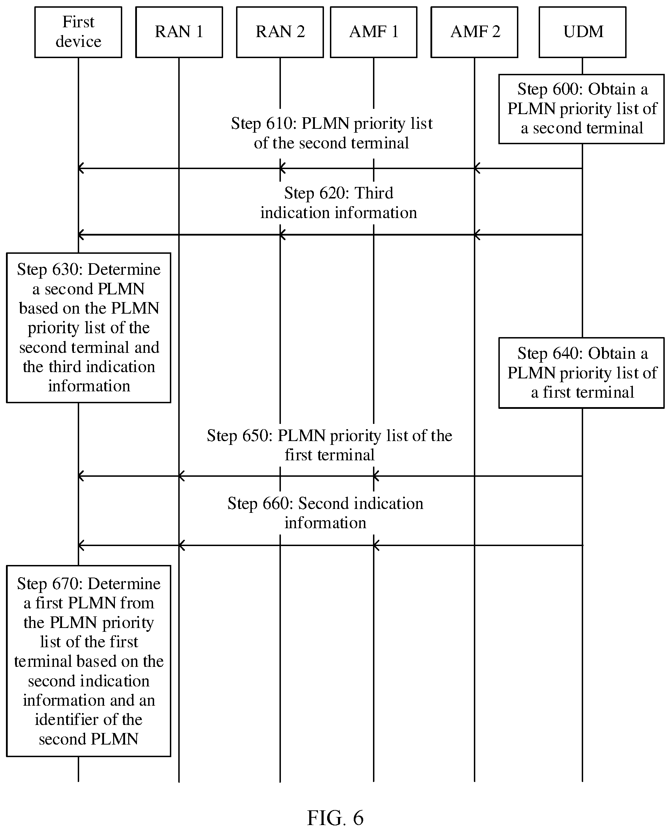

As shown in FIG. 6, this application provides a communication method. The method includes the following steps.

Step 600: A UDM obtains a PLMN priority list of a second terminal.

For example, the UDM may obtain the PLMN priority list of the second terminal from the SOR AF by using an existing SOR procedure.

Step 610: The UDM sends the PLMN priority list of the second terminal to a first device by using an AMF 2. The second terminal is included in the first device. Correspondingly, the first device receives the PLMN priority list of the second terminal. Alternatively, the second terminal in the first device receives the PLMN priority list of the second terminal.

For example, the UDM sends the PLMN priority list of the second terminal to the AMF 2, and the AMF 2 sends the PLMN priority list of the second terminal to the first device by using a RAN 2.

Step 620: Optionally, when a first terminal is associated with the second terminal, the UDM sends third indication information to the first device by using the AMF 2. Correspondingly, the first device receives the third indication information. Alternatively, the second terminal in the first device receives the third indication information.

The third indication information indicates that the second terminal preferentially selects a PLMN, or indicates that the second terminal is a primary terminal in the first device, or indicates that the second terminal selects a PLMN before another device in the first device. For example, the UDM sends the third indication information to the AMF 2, and the AMF 2 sends the third indication information to the first device by using the RAN 2.

For example, the first terminal being associated with the second terminal may be replaced with the first terminal and the second terminal allowing DualSteer or the first device allowing DualSteer.

The third indication information and the PLMN priority list of the second terminal may be sent in a same message or separately sent in different messages. This is not limited in this application.

It may be understood that both the first terminal and the second terminal are included in the first device. In other words, the first device includes the first terminal and the second terminal. In addition, the first device may further include another terminal. This is not limited in this application.

Step 630: The first device determines a second PLMN based on the PLMN priority list of the second terminal and the third indication information.

The second PLMN is a PLMN selected by the second terminal. Alternatively, it may be understood that the second PLMN serves the second terminal.

For example, the second terminal in the first device determines the second PLMN based on the PLMN priority list of the second terminal and the third indication information. For example, when the first device receives the third indication information, the first device determines the second PLMN based on the PLMN priority list of the second terminal.

Step 640: The UDM obtains a PLMN priority list of the first terminal.

For example, the UDM may obtain the PLMN priority list of the first terminal from the SOR AF by using an existing SOR procedure.

Step 650: The UDM sends the PLMN priority list of the first terminal to the first device by using an AMF 1. Correspondingly, the first device receives the PLMN priority list of the first terminal. Alternatively, the first terminal in the first device receives the PLMN priority list of the first terminal. For example, the UDM sends the PLMN priority list of the first terminal to the AMF 1, and the AMF 1 sends the PLMN priority list of the first terminal to the first device by using a RAN 1.

Step 660: When the first terminal is associated with the second terminal, the UDM may further send second indication information to the first device by using the AMF 1. Correspondingly, the first device receives the second indication information. Alternatively, the first terminal in the first device receives the second indication information.

For example, the UDM sends the second indication information to the AMF 1, and the AMF 1 sends the second indication information to the first device by using the RAN 1.

For example, the first terminal being associated with the second terminal may be replaced with the first terminal and the second terminal allowing DualSteer or the first device allowing DualSteer.

The second indication information indicates that the first terminal selects a PLMN different from a PLMN selected by the second terminal. Alternatively, the second indication information indicates that the first terminal selects a PLMN different from a PLMN serving the second terminal. Alternatively, the second indication information indicates that the first terminal avoids selecting a same PLMN as the second terminal. Alternatively, the second indication information indicates that the first device allows a DualSteer operation.

The second indication information and the PLMN priority list of the first terminal may be sent in a same message or separately sent in different messages. This is not limited in this application.

Step 670: The first device determines a first PLMN from the PLMN priority list of the first terminal based on the second indication information and the identifier of the second PLMN.

The first PLMN is different from the second PLMN.

For example, the first terminal in the first device determines the first PLMN from the PLMN priority list of the first terminal based on the second indication information and the identifier of the second PLMN.

For example, the first device may learn of the PLMN selected by the second terminal, that is, the second PLMN, to select a PLMN other than the second PLMN when selecting the PLMN based on the PLMN priority list of the first terminal.

Optionally, the second indication information indicates that the first terminal selects a PLMN in a type different from a type of the PLMN selected by the second terminal, or indicates that the first terminal avoids selecting a PLMN in a same type as the second terminal. For example, if a type of the second PLMN is an HPLMN, the first device determines the first PLMN from the PLMN priority list of the first terminal. A type of the first PLMN is different from the HPLMN. For example, the type of the first PLMN is a VPLMN.

It should be noted that step 630 is performed before step 670, step 600 to step 620 need to be performed before step 630 is performed, and step 640 to step 660 need to be performed before step 670 is performed. However, there may be a plurality of execution sequence combinations for the foregoing steps. For example, step 600 to step 620 may be performed before step 640 to step 660, or step 600 to step 620 may be performed after step 640 to step 660. Alternatively, after obtaining the PLMN priority list of the second terminal (that is, step 600) and before sending the PLMN priority list of the second terminal to the first device by using the AMF 2 (that is, step 610), the UDM may obtain the PLMN priority list of the first terminal (that is, step 640). The foregoing example is not intended to limit this application.

In addition, in a possible design, the first device may further receive fourth indication information. The fourth indication information indicates whether the first PLMN supports a DualSteer capability. For example, the first device may further receive the fourth indication information from the AMF 1.

When the fourth indication information indicates that the first PLMN does not support the DualSteer capability, the first device may further determine a third PLMN from the PLMN priority list of the first terminal. The third PLMN is different from the second PLMN and is different from the first PLMN. For example, the first device may determine the third PLMN from the PLMN priority list of the first terminal based on the second indication information and the identifier of the second PLMN. For example, the first device selects a PLMN with a next priority based on the PLMN priority list of the first terminal, and the PLMN is neither the second PLMN nor the first PLMN.

Further, the first device may further store that the first PLMN does not support the DualSteer capability, to avoid selecting the first PLMN during subsequent PLMN selection. For example, when the fourth indication information indicates that the first PLMN supports the DualSteer capability, the first device may store that the first PLMN supports the DualSteer capability, to preferentially select the first PLMN during subsequent PLMN selection.

Similarly, the first device may further receive indication information indicating whether the second PLMN supports the DualSteer capability. Details are not described herein again.

By using the foregoing design, the second indication information and the third indication information are sent to the first device, so that the first terminal and the second terminal can select different PLMNs. The first terminal and the second terminal access different PLMNs, so that the first terminal and the second terminal can back up each other.

### Embodiment 4:

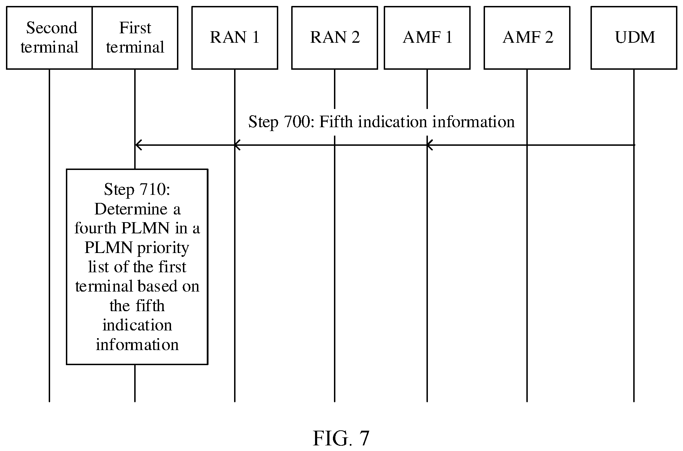

As shown in FIG. 7, this application provides a communication method. The method includes the following steps.

Step 700: When a first terminal is associated with a second terminal and a first PLMN is the same as a second PLMN, a UDM sends fifth indication information to the first terminal by using an AMF 1. Correspondingly, the first terminal receives the fifth indication information.

The first PLMN serves the first terminal, and the second PLMN serves the second terminal. The fifth indication information indicates that the first terminal reselects a PLMN, and/or indicates a type of a PLMN selected by the first terminal. Correspondingly, the first terminal receives the fifth indication information.

For example, if a type of the second PLMN is an HPLMN, the fifth indication information indicates that the first terminal selects a VPLMN or a VPLMN-type PLMN.

For example, the UDM sends the fifth indication information to the AMF 1, and the AMF 1 sends the fifth indication information to the first terminal by using a RAN 1.

For example, the first terminal being associated with the second terminal may be replaced with the first terminal and the second terminal allowing DualSteer or a first device allowing DualSteer.

For example, after the first terminal accesses the first PLMN, the AMF 1 may send, to the UDM, an identifier of a network currently accessed by the first terminal, that is, an identifier of a PLMN that serves the first terminal, namely, an identifier of the first PLMN. After the second terminal accesses the second PLMN, an AMF 2 may send, to the UDM, an identifier of a network currently accessed by the second terminal, that is, an identifier of a PLMN that serves the second terminal, namely, an identifier of the second PLMN. The UDM may determine whether the first PLMN is the same as the second PLMN.

For example, a type of a PLMN is a visited PLMN (visited PLMN, VPLMN) or an equivalent PLMN (equivalent PLMN, EPLMN).

In this embodiment, when the first terminal is associated with the second terminal and the first PLMN is the same as the second PLMN, the UDM sends the fifth indication information to the first terminal by using the AMF 1. It may be understood that, this may alternatively be replaced with the following: When the first terminal is associated with the second terminal and the first PLMN is the same as the second PLMN, the UDM sends the fifth indication information to the second terminal by using the AMF 2. In this case, the fifth indication information indicates that the second terminal reselects a PLMN, and/or indicates a type of a PLMN selected by the second terminal.

It may be understood that a PLMN priority list of the first terminal and the fifth indication information may be sent in a same message or separately sent in different messages. This is not limited in this application.

Step 710: The first terminal determines a fourth PLMN in the PLMN priority list of the first terminal based on the fifth indication information.

The fourth PLMN is a PLMN other than the first PLMN in the PLMN priority list of the first terminal, that is, the fourth PLMN is different from the first PLMN.

In an example, if the fifth indication information indicates that the first terminal reselects a PLMN, the first terminal may select a PLMN with a next priority based on the fifth indication information and the PLMN priority list of the first terminal, and the PLMN is not the first PLMN.

In another example, if the fifth indication information indicates the type of the PLMN selected by the first terminal, the first terminal determines, based on the fifth indication information and the PLMN priority list of the first terminal, whether a PLMN with a next priority meets the type of the PLMN indicated by the fifth indication information; and if the PLMN with the next priority meets the type of the PLMN indicated by the fifth indication information, selects the PLMN; or otherwise, continues to perform determining based on a sequence of the PLMN priority list of the first terminal until the type of the PLMN indicated by the fifth indication information is met. Alternatively, when the fifth indication information indicates that the first terminal selects a VPLMN or a VPLMN-type PLMN, the first terminal selects a VPLMN PLMN from the PLMN priority list of the first terminal, or selects a PLMN from a VPLMN PLMN priority list based on the fifth indication information.

By using the foregoing design, when the first PLMN is the same as the second PLMN, the first terminal is triggered to reselect a PLMN, and/or the type of the PLMN selected by the first terminal is indicated, so that the first terminal and the second terminal can select different PLMNs. The first terminal and the second terminal access different PLMNs. The first terminal and the second terminal can back up each other.

### Embodiment 5:

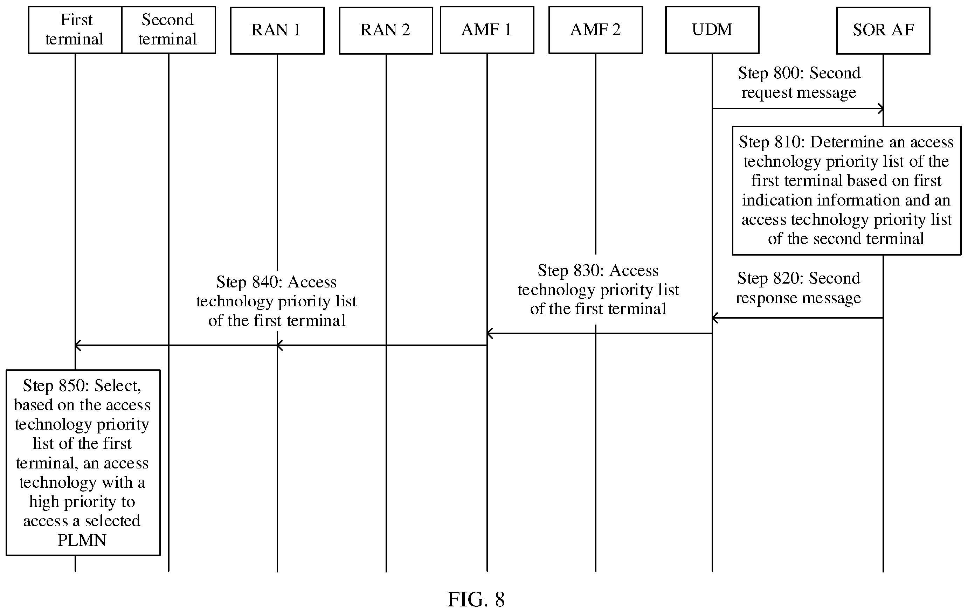

As shown in FIG. 8, this application provides a communication method. The method includes the following steps.

Step 800: A UDM sends a second request message to an SOR AF. The second request message is used to request network selection information of a first terminal. The second request message includes an identifier of the first terminal and first indication information. The first indication information indicates that the first terminal is associated with a second terminal. Correspondingly, the SOR AF receives the second request message from the UDM.

Optionally, the second request message being used to request the network selection information of the first terminal may be replaced with the second request message being used to request to update a network selection list of the first terminal, or the second request message being used to request a network selection list of the first terminal.

The identifier of the first terminal may be an SUPI of the first terminal.

The first indication information indicates that the first terminal is associated with the second terminal, or the first indication information indicates that the first terminal and the second terminal allow DualSteer or support DualSteer, or the first indication information indicates that the first terminal and the second terminal are included in a same device. For example, the first indication information may include an identifier of the second terminal, for example, an SUPI of the second terminal. Correspondingly, the second request message includes the identifier of the first terminal and the identifier of the second terminal.

Optionally, the UDM sends the second request message to the SOR AF only when the first terminal and the second terminal allow DualSteer or support DualSteer.

Optionally, the UDM sends the second request message to the SOR AF only when the first terminal is associated with the second terminal.

For example, the first request message is an SOR get request.

Step 810: The SOR AF determines an access technology priority list of the first terminal based on the first indication information and an access technology priority list of the second terminal. The access technology priority list of the first terminal is different from the access technology priority list of the second terminal.

For example, an access technology in the access technology priority list of the first terminal and an access technology in the access technology priority list of the second terminal are used to access a same public land mobile network.

For example, the first terminal may access a PLMN 1 by using an access technology #1 or an access technology #2, the second terminal may access the PLMN 1 by using the access technology #1 or the access technology #2, and the SOR AF may configure different terminals to preferentially access the PLMN 1 by using different access technologies. For example, for the first terminal, a priority of the access technology #1 is higher than a priority of the access technology #2; and for the second terminal, a priority of the access technology #2 is higher than a priority of the access technology #1. A priority list of the first terminal may be shown in Table 2, and a priority list of the second terminal may be shown in Table 3.

**Table 2**

| Bytes (bytes) | Description (description) | M/O | Length (length) (unit: bytes) |
|---|---|---|---|
| 1 to 3 | 1^{st} PLMN is a PLMN 1 | M | 3 |
| 4 and 5 | A 1^{st} PLMN access technology identifier is an identifier of the access technology #1 | M | 2 |
| ... | ... | ... | ... |

**Table 3**

| Bytes (bytes) | Description (description) | M/O | Length (length) (unit: bytes) |
|---|---|---|---|
| 1 to 3 | 1^{st} PLMN is the PLMN 1 | M | 3 |
| 4 and 5 | A 1^{st} PLMN access technology identifier is an identifier of the access technology #2 | M | 2 |
| ... | ... | ... | ... |

In addition, the SOR AF may further update the access technology priority list of the second terminal, or the SOR AF may not need to update the access technology priority list of the second terminal.

Step 820: The SOR AF sends a second response message to the UDM. The second response message includes the access technology priority list of the first terminal. The access technology priority list of the first terminal is different from the access technology priority list of the second terminal.

Optionally, if the SOR AF further updates the access technology priority list of the second terminal, the SOR AF may further send the access technology priority list of the second terminal to the UDM. The access technology priority list of the second terminal may also be included in the second response message, or may be separately sent. This is not limited in this application.

It may be understood that the foregoing embodiment may be combined with the embodiment shown in FIG. 4 or FIG. 5. The SOR AF may send the PLMN priority list of the first terminal and the access technology priority list of the first terminal to the UDM.

Further, step 830: The UDM sends the access technology priority list of the first terminal to an AMF 1. Correspondingly, the AMF 1 receives the access technology priority list of the first terminal from the UDM.

Optionally, if the SOR AF further sends the access technology priority list of the second terminal to the UDM, the UDM may further send the access technology priority list of the second terminal to an AMF 2. Further, the AMF 2 sends the access technology priority list of the second terminal to the second terminal by using a RAN 2, and the second terminal may select, based on the access technology priority list of the second terminal, an access technology with a high priority to access a selected PLMN.

Step 840: The AMF 1 sends the access technology priority list of the first terminal to the first terminal by using the RAN 1. Correspondingly, the first terminal receives the access technology priority list of the first terminal.

Step 850: The first terminal selects, based on the access technology priority list of the first terminal, an access technology with a high priority to access a selected PLMN.

For example, the access technology priority list of the first terminal is shown in Table 2. When the first terminal selects to access the PLMN 1 based on Table 2, the first terminal preferentially selects the access technology #1 to access the PLMN 1. The access technology priority list of the second terminal is shown in Table 3. When the second terminal selects to access the PLMN 1 based on Table 3, the second terminal preferentially selects the access technology #2 to access the PLMN 1.

By using the foregoing method, the first terminal and the second terminal are allowed to access a network or a same PLMN by using different access technologies as much as possible. The first terminal and the second terminal that access a network by using different access technologies can back up each other. For example, when the first terminal cannot access the network by using the access technology #1, for example, when connection fails, data may be transferred, for transmission, to the second terminal that accesses the network by using the access technology #2.

### Embodiment 6:

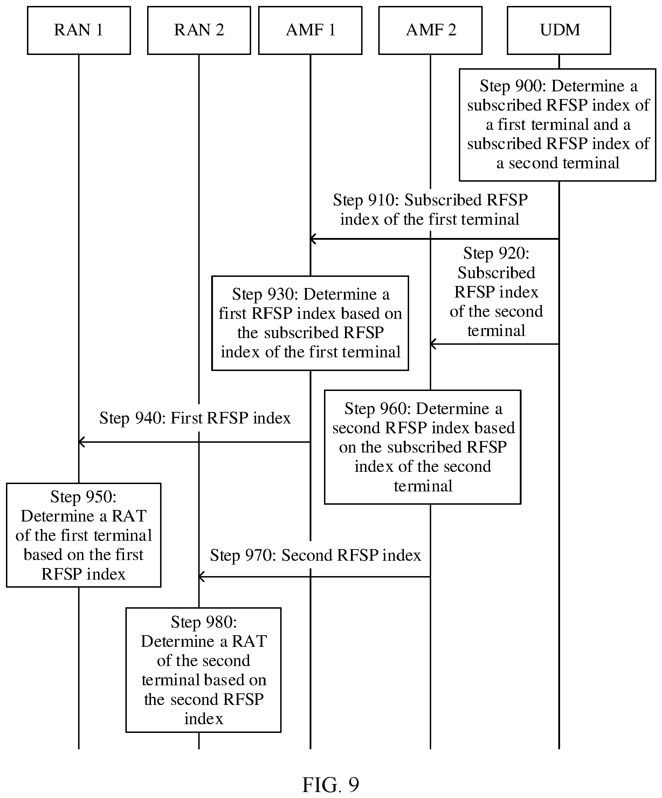

As shown in FIG. 9, this application provides a communication method. The method includes the following steps.

Step 900: When a first terminal is associated with a second terminal, a UDM determines a subscribed RFSP index of the first terminal and a subscribed RFSP index of the second terminal.

For example, the first terminal being associated with the second terminal may be replaced with the first terminal and the second terminal allowing DualSteer or a first device allowing DualSteer.

The subscribed RFSP index of the first terminal is different from the subscribed RFSP index of the second terminal. For example, the subscribed RFSP index of the first terminal is 1, and the subscribed RFSP index of the second terminal is 2. The subscribed RFSP index of the first terminal being 1 indicates that E-UTRAN is prioritized over 5G NR, and the subscribed RFSP index of the second terminal being 2 indicates that 5G NR is prioritized over E-UTRAN.

Step 910: The UDM sends the subscribed RFSP index of the first terminal to an AMF 1.

Step 920: The UDM sends the subscribed RFSP index of the second terminal to an AMF 2.

Step 930: The AMF 1 determines a first RFSP index based on the subscribed RFSP index of the first terminal.

The first RFSP index is an RFSP index in use. The first RFSP index is an RFSP index determined by the AMF 1 for the first terminal. This is also understood that the first RFSP index is an RFSP index that is used by a RAN 1 and that is determined by the AMF 1.

For example, the AMF 1 may directly use the subscribed RFSP index of the first terminal as the first RFSP index.

Step 940: The AMF 1 sends the first RFSP index to the RAN 1. Correspondingly, the RAN 1 receives the first RFSP index from the AMF 1.

Step 950: The RAN 1 determines a RAT of the first terminal based on the first RFSP index.

For example, if the first RFSP index is the same as the subscribed RFSP index of the first terminal, and the subscribed RFSP index of the first terminal is 1, the RAN 1 controls the first terminal to preferentially access E-UTRAN, where the subscribed RFSP index of the first terminal being 1 indicates that E-UTRAN is prioritized over 5G NR.

Step 960: The AMF 2 determines a second RFSP index based on the subscribed RFSP index of the second terminal. The second RFSP index is an RFSP index in use. The second RFSP index is an RFSP index determined by the AMF 2 for the second terminal. This is also described as the second RFSP index being an RFSP index that is used by a RAN 2 and that is determined by the AMF 2.

Step 970: The AMF 2 sends the second RFSP index to the RAN 2. Correspondingly, the RAN 2 receives the second RFSP index from the AMF 2.

Step 980: The RAN 2 determines a RAT of the second terminal based on the second RFSP index.

For example, if the second RFSP index is the same as the subscribed RFSP index of the second terminal, and the subscribed RFSP index of the second terminal is 2, the RAN 2 controls the second terminal to preferentially access 5G NR, where the subscribed RFSP index of the first terminal being 2 indicates that 5G NR is prioritized over E-UTRAN.

By using the foregoing method, the first terminal and the second terminal access a network or a same PLMN by using different access technologies as much as possible. The first terminal and the second terminal that access a network by using different access technologies can back up each other.

### Embodiment 7:

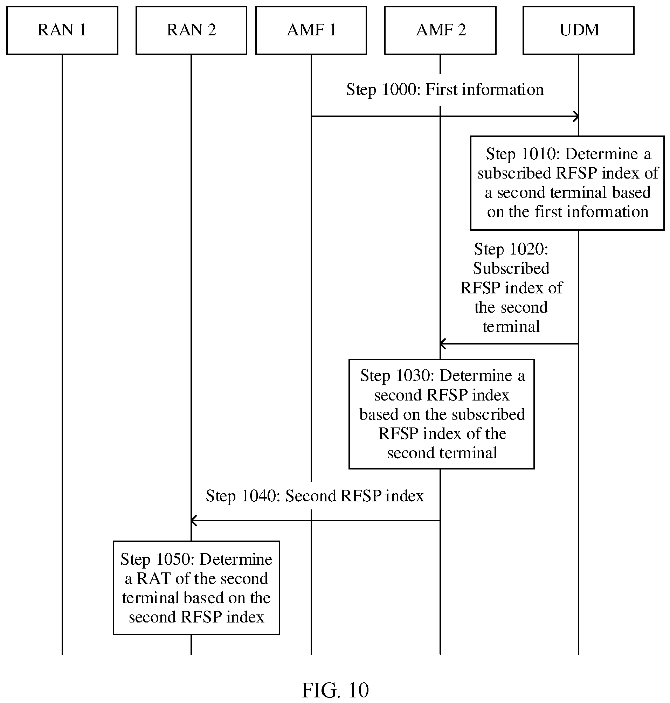

As shown in FIG. 10, this application provides a communication method. The method includes the following steps.

Step 1000: An AMF 1 sends first information to a UDM. Correspondingly, the UDM receives the first information from the AMF 1.

The first information indicates a first RFSP index and/or a first access type. The first RFSP index is an RFSP index determined by the AMF 1 for a first terminal. The first access type is an access type corresponding to an access network device accessed by the first terminal. In other words, the first access type is a RAT type corresponding to an access network device (RAN 1) accessed by the first terminal.

For example, after the AMF 1 determines the first RFSP index, the AMF 1 may send the first information to the UDM. Alternatively, after the RAN 1 determines that the access type corresponding to the access network device accessed by the first terminal is the first access type, the RAN 1 may send the first access type to the AMF 1, and the AMF 1 may send the first access type to the UDM.

In a possible implementation, before the AMF 1 sends the first information to the UDM, the UDM may further send sixth indication information to the AMF 1. The sixth indication information is used to request the first information, or the sixth indication information is used to request the RFSP index determined by the AMF 1 for the first terminal. The AMF 1 sends first information to the UDM. The first information includes the first RFSP index.

Step 1010: When the first terminal is associated with a second terminal, the UDM determines a subscribed RFSP index of the second terminal based on the first information.

For example, the first terminal being associated with the second terminal may be replaced with the first terminal and the second terminal allowing DualSteer or a first device allowing DualSteer.

For example, when determining the subscribed RFSP index of the second terminal based on the first information, the UDM updates an initial subscribed RFSP index of the second terminal based on the first information, to determine the subscribed RFSP index of the second terminal.

In an example, if the first information includes the first RFSP index, the UDM determines the subscribed RFSP index of the second terminal based on the first RFSP index. The subscribed RFSP index of the second terminal is different from the first RFSP index.

For example, the first RFSP index is 1, and the subscribed RFSP index of the second terminal is 2. The first RFSP index being 1 indicates that E-UTRAN is prioritized over 5G NR, and the subscribed RFSP index of the second terminal being 2 indicates that 5G NR is prioritized over E-UTRAN.

In another example, if the first information includes the first access type, the UDM determines the subscribed RFSP index of the second terminal based on the first access type.

For example, if the first access type is E-UTRAN, the subscribed RFSP index of the second terminal may indicate that 5G NR access is prioritized over E-UTRAN access.

Step 1020: The UDM sends the subscribed RFSP index of the second terminal to an AMF 2. Correspondingly, the AMF 2 receives the subscribed RFSP index of the second terminal from the UDM.

For example, in a registration process of the second terminal, the AMF 2 may obtain subscription information of the second terminal from the UDM. The subscription information of the second terminal includes the subscribed RFSP index of the second terminal.

Step 1030: The AMF 2 determines a second RFSP index based on the subscribed RFSP index of the second terminal.

The second RFSP index is an RFSP index in use. The second RFSP index is an RFSP index determined by the AMF 2 for the second terminal. This is also described as the second RFSP index being an RFSP index that is used by a RAN 2 and that is determined by the AMF 2.

For example, the AMF 2 may directly use the subscribed RFSP index of the second terminal as the second RFSP index.

Step 1040: The AMF 2 sends the second RFSP index to the RAN 2. Correspondingly, the RAN 2 receives the second RFSP index from the AMF 2.

Step 1050: The RAN 2 determines a RAT of the second terminal based on the second RFSP index.

By using the foregoing method, the first terminal and the second terminal access a network or a same PLMN by using different access technologies as much as possible. The first terminal and the second terminal that access a network by using different access technologies can back up each other.

### Embodiment 8:

This application provides a communication method. The method includes the following steps.

Step 1100: An AMF 1 sends first information to a UDM. Correspondingly, the UDM receives the first information from the AMF 1.

The first information indicates a first RFSP index and/or a first access type. The first RFSP index is an RFSP index determined by the AMF 1 for a first terminal. The first access type is an access type corresponding to an access network device accessed by the first terminal. In other words, the first access type is a RAT type corresponding to an access network device (RAN 1) accessed by the first terminal.

For step 1100, refer to step 1000. Details are not described again.

Step 1110: When the first terminal is associated with a second terminal, the UDM sends second information to an AMF 2. Correspondingly, the AMF 2 receives the second information from the UDM.

For example, the first terminal being associated with the second terminal may be replaced with the first terminal and the second terminal allowing DualSteer or a first device allowing DualSteer.

Optionally, when the first terminal is associated with the second terminal, the UDM sends the second information to the AMF 2. Alternatively, the UDM may send the second information to the AMF 2 when context of the second terminal that is stored in the UDM includes DualSteer allowed (DualSteer authorized or DualSteer allowed).

Optionally, the UDM may further send first indication information to the AMF 2. The first indication information indicates that the first terminal is associated with the second terminal. The first indication information and the second information may be sent in a same message, or may be separately sent in different messages. This is not limited in this application. The first indication information indicates that the first terminal is associated with the second terminal, or the first indication information indicates that the first terminal and the second terminal allow DualSteer or support DualSteer, or the first indication information indicates that the first terminal and the second terminal are included in a same device. For example, the first indication information may be DualSteer authorized or DualSteer allowed.

For example, the second information includes third information and/or a subscribed RFSP index of the first terminal, and the third information is determined based on the first RFSP index and/or the first access type; or the second information includes at least one of the first RFSP index, the first access type, or the subscribed RFSP index of the first terminal.

The following further describes a possible implementation of the second information.

Manner 1: The first information includes the first RFSP index, and the second information includes the first RFSP index and/or the subscribed RFSP index of the first terminal.

Manner 2: The first information includes the first access type, and the second information includes the first access type and/or the subscribed RFSP index of the first terminal.

Manner 3: The first information includes the first RFSP index and the first access type, and the second information includes one or more of the first RFSP index, the first access type, or the subscribed RFSP index of the first terminal.

Manner 4: The second information includes the third information.

The third information is determined based on the first RFSP index and/or the first access type.

For example, if the first information includes the first access type, the third information includes a fourth access type, and the fourth access type is different from the first access type. The fourth access type indicates that the UDM recommends that the AMF preferentially uses the fourth access type, or the fourth access type indicates that the UDM recommends that a priority of the fourth access type is higher than a priority of another access type.

For example, if the first information includes the first RFSP index, the third information includes a fourth RFSP index, and the fourth RFSP index is different from the first RFSP index. The fourth RFSP index indicates that the UDM recommends that the AMF preferentially uses the fourth RFSP index, or the fourth RFSP index indicates that the UDM recommends that the fourth RFSP index is used as an RFSP index determined by the AMF 2 for the second terminal.

Manner 5: The second information includes the third information and the subscribed RFSP index of the first terminal.

It may be understood that Manner 1 to Manner 5 above are merely examples, and are not intended to limit this application.

In addition, in a possible implementation, the AMF 2 may further send fourth information to the UDM. The fourth information indicates a second RFSP index and/or a second access type. The second RFSP index is an RFSP index determined by the AMF 2 for the second terminal. The second access type is an access type corresponding to an access network device accessed by the second terminal, or the second access type is a RAT type corresponding to an access network device (RAN 2) accessed by the second terminal. Alternatively, the UDM sending the second information to the AMF 2 when the first terminal is associated with the second terminal may be replaced with the UDM sending the second information to the AMF 2 when the first terminal is associated with the second terminal, and the first RFSP is the same as the second RFSP index and/or the first access type is the same as the second access type.

In a possible implementation, if the first information includes the first RFSP index, and the fourth information includes the second RFSP index, the UDM sends the second information to the AMF 2 when the first terminal is associated with the second terminal, and the first RFSP is the same as the second RFSP index.

In another possible implementation, if the first information includes the first access type, and the fourth information includes the second access type, the UDM sends the second information to the AMF 2 when the first terminal is associated with the second terminal, and the first access type is the same as the second access type.

In still another possible implementation, if the first information includes the first access type and the first RFSP index, and the fourth information includes the second access type and the second RFSP index, the UDM sends the second information to the AMF 2 when the first terminal is associated with the second terminal, the first access type is the same as the second access type, and the first RFSP index is the same as the second RFSP index.

In addition, if the first terminal is associated with the second terminal, and the first RFSP is the same as the second RFSP index and/or the first access type is the same as the second access type, the UDM may send seventh indication information to the AMF 2. The seventh indication information indicates that the first terminal is associated with the second terminal, and the first RFSP is the same as the second RFSP index and/or the first access type is the same as the second access type. In other words, the UDM may not need to send the second information to the AMF 2. Instead, the AMF 2 is only notified that the first terminal is associated with the second terminal, and the first RFSP is the same as the second RFSP index and/or the first access type is the same as the second access type, to trigger the AMF 2 to redetermine an RFSP index for the second terminal.

Step 1120: The AMF 2 determines a third RFSP index based on the subscribed RFSP index of the second terminal and the second information.

Based on different content included in the second information, the AMF 2 may determine the third RFSP index in but not limited to the following manners:

Manner A: If the second information includes the first RFSP index, corresponding to the foregoing possible Manner 1 and Manner 3 of the second information, the AMF 2 may determine the third RFSP index based on the first RFSP index and the subscribed RFSP index of the second terminal.

For example, if a RAT priority sequence indicated by the first RFSP index is (RAT#1, RAT#2, RAT#3), and a RAT priority sequence indicated by the subscribed RFSP index of the second terminal is (RAT#1, RAT#3, RAT#2), a RAT priority sequence indicated by the third RFSP index is (RAT#3, RAT#1, RAT#2).

In other words, the AMF 2 may consider that a RAT with a highest priority in the RAT priority sequence indicated by the determined third RFSP index is not RAT#1, and may consider a priority sequence of other RATs in the RAT priority sequence indicated by the subscribed RFSP index of the second terminal. For example, in the RAT priority sequence indicated by the third RFSP index, a priority of RAT#1 is still higher than a priority of RAT#2.

For another example, if a RAT priority sequence indicated by the first RFSP index is (RAT#1, RAT#2, RAT#3), and a RAT priority sequence indicated by the subscribed RFSP index of the second terminal is (RAT#1, RAT#2, RAT#3), a RAT priority sequence indicated by the third RFSP index is (RAT#2, RAT#1, RAT#3).

In other words, the AMF 2 may consider that a RAT with a highest priority in the RAT priority sequence indicated by the determined third RFSP index is not RAT#1, and may consider a priority sequence of other RATs in the RAT priority sequence indicated by the subscribed RFSP index of the second terminal. For example, in the RAT priority sequence indicated by the third RFSP index, a priority of RAT#1 is still higher than a priority of RAT#3.

Manner B: If the second information includes the first access type, corresponding to the foregoing possible Manner 2 and Manner 3 of the second information, the AMF 2 may determine the third RFSP index based on the first access type and the subscribed RFSP index of the second terminal.

For example, if the first access type is RAT#1, and a RAT priority sequence indicated by the subscribed RFSP index of the second terminal is (RAT#1, RAT#3, RAT#2), the RAT priority sequence indicated by the third RFSP index is (RAT#3, RAT#2, RAT#1).

In other words, the AMF 2 may consider that a RAT with a highest priority in the RAT priority sequence indicated by the determined third RFSP index is not RAT#1, and may consider a priority sequence of other RATs in the RAT priority sequence indicated by the subscribed RFSP index of the second terminal.

Manner C: If the second information includes the third information, and the third information includes the fourth RFSP index, corresponding to the foregoing possible Manner 4 and Manner 5 of the second information, the AMF 2 may determine the third RFSP index based on the fourth RFSP index and the subscribed RFSP index of the second terminal.

For example, the AMF 2 may use the fourth RFSP index as the third RFSP index, or the AMF 2 may determine the third RFSP index based on the fourth RFSP index and the subscribed RFSP index of the second terminal.

For example, if a RAT priority sequence indicated by the first RFSP index is (RAT#1, RAT#2, RAT#3), a RAT priority sequence indicated by the fourth RFSP index is (RAT#2, RAT#1, RAT#3), and a RAT priority sequence indicated by the subscribed RFSP index of the second terminal is (RAT#1, RAT#2, RAT#3), a RAT priority sequence indicated by the third RFSP index may be (RAT#2, RAT#1, RAT#3).

Manner D: If the second information includes the third information, and the third information includes the fourth access type, corresponding to the foregoing possible Manner 4 and Manner 5 of the second information, the AMF 2 may determine the third RFSP index based on the fourth access type and the subscribed RFSP index of the second terminal.

For example, if the first access type is RAT#1, the fourth access type is RAT#2, and a RAT priority sequence indicated by the subscribed RFSP index of the second terminal is (RAT#1, RAT#3, RAT#2), the RAT priority sequence indicated by the third RFSP index is (RAT#2, RAT#1, RAT#1).

In a possible implementation, if the AMF 2 further receives the first indication information, when the AMF 2 determines the third RFSP index based on the subscribed RFSP index of the second terminal and the second information, the AMF 2 determines the third RFSP index based on the first indication information, the subscribed RFSP index of the second terminal, and the second information. In other words, when the AMF 2 receives the first indication information, the AMF 2 determines the third RFSP index based on the subscribed RFSP index of the second terminal and the second information.

Step 1130: The AMF 2 sends the third RFSP index to the RAN 2. Correspondingly, the RAN 2 receives the third RFSP index from the AMF 2.

Step 1140: The RAN 2 determines a RAT of the second terminal based on the third RFSP index.

By using the foregoing method, the first terminal and the second terminal access a network or a same PLMN by using different access technologies as much as possible. The first terminal and the second terminal that access a network by using different access technologies can back up each other.

### Embodiment 9:

This application provides a communication method. The method includes:
Step 1200: A PCF obtains a subscribed RFSP index of a second terminal and second information.

The PCF is responsible for access policy management of the second terminal.

The PCF may obtain the subscribed RFSP index of the second terminal and the second information in but not limited to the following two manners:
Possible implementation a: The PCF receives the subscribed RFSP index of the second terminal and the second information from an AMF 2.

Possible implementation b: The PCF receives the subscribed RFSP index of the second terminal from an AMF 2, and the PCF receives the second information from a UDM or a UDR.

In an example, the PCF learns that a first terminal is associated with the second terminal, and requests the second information from the UDM/UDR.

In another example, the UDM/UDR learns that the first terminal is associated with the second terminal. When the PCF obtains subscription information of the second terminal from the UDM/UDR, the UDM/UDR sends the subscription information of the second terminal to the PCF. The subscription information of the second terminal includes the second information.

In still another example, the UDM/UDR learns that the first terminal is associated with the second terminal. When the PCF obtains the subscription information of the second terminal from the UDM/UDR, if a PLMN that serves the first terminal is the same as a PLMN that serves the second terminal, the UDM/UDR sends the subscription information of the second terminal to the PCF. The subscription information of the second terminal includes the second information.

For related descriptions of the second information, refer to related content in step 1110.

Step 1210: The PCF determines an authorized RFSP index of the second terminal based on the subscribed RFSP index of the second terminal and the second information.

This is similar to a process in which the AMF 2 determines the third RFSP index based on the subscribed RFSP index of the second terminal and the second information in step 1120. Details are not described herein again.

For example, the PCF may further receive first indication information from the AMF 2 or the UDM. The first indication information indicates that the first terminal is associated with the second terminal, or indicate that the first terminal and the second terminal allow DualSteer or support DualSteer. For example, the first indication information may be DualSteer authorized or DualSteer allowed. When determining the authorized RFSP index of the second terminal based on the subscribed RFSP index of the second terminal and the second information, the PCF determines the authorized RFSP index of the second terminal based on the first indication information, the subscribed RFSP index of the second terminal, and the second information. In other words, when the PCF receives the first indication information, the PCF determines the authorized RFSP index of the second terminal based on the subscribed RFSP index of the second terminal and the second information.

Step 1220: The PCF sends the authorized RFSP index of the second terminal to the AMF 2. Correspondingly, the AMF 2 receives the authorized RFSP index of the second terminal from the PCF.

Step 1230: The AMF 2 determines a fifth RFSP index based on the authorized RFSP index of the second terminal.

The fifth RFSP index is an RFSP index in use. The fifth RFSP index is an RFSP index determined by the AMF 2 for the second terminal. This is also described as the fifth RFSP index being an RFSP index that is used by a RAN 2 and that is determined by the AMF 2.

Step 1240: The AMF 2 sends the fifth RFSP index to the RAN 2. Correspondingly, the RAN 2 receives the fifth RFSP index from the AMF 2.

Step 1250: The RAN 2 determines a RAT of the second terminal based on the fifth RFSP index.

By using the foregoing method, the first terminal and the second terminal access a network or a same PLMN by using different access technologies as much as possible. The first terminal and the second terminal that access a network by using different access technologies can back up each other.

It may be understood that, to implement functions in the foregoing embodiments, each device (for example, the first network element, the second network element, the third network element, the fourth network element, the fifth network element, the first terminal, the second terminal, and the first device) includes a corresponding hardware structure and/or software module for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

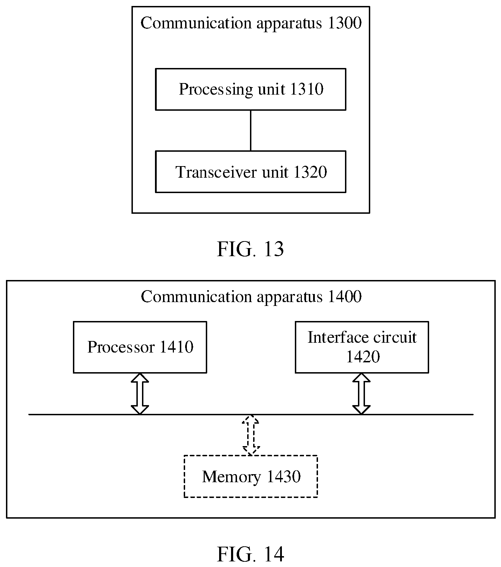

FIG. 13 and FIG. 14 are diagrams of possible structures of communication apparatuses according to embodiments of this application. The communication apparatuses may be configured to implement functions of each device in the foregoing method embodiment. Therefore, beneficial effects of the foregoing method embodiments can also be achieved.

As shown in FIG. 13, the communication apparatus 1300 includes a processing unit 1310 and a transceiver unit 1320.

When the communication apparatus 1300 is configured to implement functions of the first network element (for example, an SOR AF) in the method embodiment shown in FIG. 4 or FIG. 5,
the transceiver unit is configured to receive a first request message from a second network element, where the first request message is used to request network selection information of a first terminal, the first request message includes an identifier of the first terminal and first indication information, and the first indication information indicates that the first terminal is associated with a second terminal;
the processing unit is configured to determine a public land mobile network priority list of the first terminal based on the first indication information and a public land mobile network priority list of the second terminal, or determine a public land mobile network priority list of the first terminal based on the first indication information and an identifier of a second public land mobile network, where the second public land mobile network serves the second terminal; and
the transceiver unit is configured to send a first response message to the second network element, where the first response message includes the public land mobile network priority list of the first terminal.

In a possible design, the first indication information includes an identifier of the second terminal.

In a possible design, the transceiver unit is configured to: before the public land mobile network priority list of the first terminal is determined based on the first indication information and the identifier of the second public land mobile network, receive the identifier of the second public land mobile network from the second network element.

In a possible design, the transceiver unit is configured to send the public land mobile network priority list of the second terminal to the second network element.

In a possible design, the first terminal and the second terminal are included in a same DualSteer device.

When the communication apparatus 1300 is configured to implement functions of the second network element (for example, a UDM) in the method embodiment shown in FIG. 4 or FIG. 5,
the transceiver unit is configured to receive and send information; and the processing unit is configured to: by using the transceiver unit, send a first request message to a first network element, where the first request message is used to request network selection information of a first terminal, the first request message includes an identifier of the first terminal and first indication information, and the first indication information indicates that the first terminal is associated with a second terminal; and receive a first response message from the first network element, where the first response message includes a public land mobile network priority list of the first terminal.

In a possible design, the first indication information includes an identifier of a second terminal.

In a possible design, the transceiver unit is configured to send an identifier of a second public land mobile network to the first network element. The second public land mobile network serves the second terminal.

In a possible design, the transceiver unit is configured to receive a public land mobile network priority list of the second terminal from the first network element.

In a possible design, the transceiver unit is configured to: when a first public land mobile network is the same as the second public land mobile network, send the first request message to the first network element. The first public land mobile network serves the first terminal, and the second public land mobile network serves the second terminal.

In a possible design, the first terminal and the second terminal are included in a same DualSteer device.

When the communication apparatus 1300 is configured to implement functions of the second network element (for example, a UDM) in the method embodiment shown in FIG. 6,
the transceiver unit is configured to receive and send information; and the processing unit is configured to: by using the transceiver unit, send a public land mobile network priority list of a first terminal to a third network element, where the third network element is responsible for mobility management or access management of the first terminal; and when the first terminal is associated with a second terminal, send second indication information to the third network element, where the second indication information indicates that the first terminal selects a public land mobile network different from a public land mobile network selected by the second terminal, and the public land mobile network selected by the first terminal belongs to the public land mobile network priority list of the first terminal.

In a possible design, the transceiver unit is configured to send third indication information to a fourth network element. The third indication information indicates that the second terminal preferentially selects the public land mobile network, or indicates that the second terminal is a primary terminal in a first device. The first terminal and the second terminal are included in the first device. The fourth network element is responsible for mobility management or access management of the second terminal.

When the communication apparatus 1300 is configured to implement functions of the first device in the method embodiment shown in FIG. 6, and the first device includes a first terminal and a second terminal,
the transceiver unit is configured to receive a public land mobile network priority list of the first terminal and second indication information, where the second indication information indicates that the first terminal selects a public land mobile network different from a public land mobile network selected by the second terminal; and
the processing unit is configured to determine a first public land mobile network from the public land mobile network priority list of the first terminal based on the second indication information and an identifier of a second public land mobile network, where the second public land mobile network is a public land mobile network selected by the second terminal, or the second public land mobile network serves the second terminal, and the first public land mobile network is different from the second public land mobile network.

In a possible design, the transceiver unit is configured to receive fourth indication information. The fourth indication information indicates whether the first public land mobile network supports a DualSteer capability.

The processing unit is configured to: when the fourth indication information indicates that the first public land mobile network does not support the DualSteer capability, determine a third public land mobile network from the public land mobile network priority list of the first terminal, where the third public land mobile network is different from the second public land mobile network and is different from the first public land mobile network.

In a possible design, the transceiver unit is configured to: receive third indication information, where the third indication information indicates that the second terminal preferentially selects the public land mobile network, or indicates that the second terminal is a primary terminal in the first device; and receive a public land mobile network priority list of the second terminal.

The processing unit is configured to select the second public land mobile network from the public land mobile network priority list of the second terminal based on the third indication information.

When the communication apparatus 1300 is configured to implement functions of the second network element (for example, a UDM) in the method embodiment shown in FIG. 7,
the transceiver unit is configured to receive and send information; and the processing unit is configured to: by using the transceiver unit, send fifth indication information to a third network element when a first terminal is associated with a second terminal and a first public land mobile network is the same as a second public land mobile network, where the first public land mobile network serves the first terminal, the second public land mobile network serves the second terminal, and the fifth indication information indicates that the first terminal reselects a public land mobile network, and/or indicates a type of a public land mobile network selected by the first terminal.

In a possible design, the type of the public land mobile network is a visited public land mobile network or an equivalent public land mobile network.

When the communication apparatus 1300 is configured to implement functions of the first terminal in the method embodiment shown in FIG. 7,
the transceiver unit is configured to receive fifth indication information, where the fifth indication information indicates that the first terminal reselects a public land mobile network, and/or indicates a type of a public land mobile network selected by the first terminal; and
the processing unit is configured to determine a fourth public land mobile network in a public land mobile network priority list of the first terminal based on the fifth indication information.

In a possible design, the type of the public land mobile network is a visited public land mobile network or an equivalent public land mobile network.

When the communication apparatus 1300 is configured to implement functions of the first network element (for example, an SOR AF) in the method embodiment shown in FIG. 8,
the transceiver unit is configured to receive a second request message from a second network element, where the second request message is used to request network selection information of a first terminal, the second request message includes an identifier of the first terminal and first indication information, and the first indication information indicates that the first terminal is associated with a second terminal;
the processing unit is configured to determine an access technology priority list of the first terminal based on the first indication information and an access technology priority list of the second terminal; and
the transceiver unit is configured to send a second response message to the second network element, where the second response message includes the access technology priority list of the first terminal.

In a possible design, the first indication information includes an identifier of the second terminal.

In a possible design, the transceiver unit is configured to send the access technology priority list of the second terminal to the second network element.

In a possible design, the first terminal and the second terminal are included in a same DualSteer device.

In a possible design, an access technology in the access technology priority list of the first terminal and an access technology in the access technology priority list of the second terminal are used to access a same public land mobile network.

When the communication apparatus 1300 is configured to implement functions of the second network element (for example, a UDM) in the method embodiment shown in FIG. 8,
the transceiver unit is configured to receive and send information; and the processing unit is configured to: by using the transceiver unit, send a second request message to a first network element, where the second request message is used to request network selection information of a first terminal, the second request message includes an identifier of the first terminal and first indication information, and the first indication information indicates that the first terminal is associated with a second terminal; and receive a second response message from the first network element, where the second response message includes an access technology priority list of the first terminal.

In a possible design, the first indication information includes an identifier of the second terminal.

In a possible design, the transceiver unit is configured to receive an access technology priority list of the second terminal from the first network element.

In a possible design, the first terminal and the second terminal are included in a same DualSteer device.

In a possible design, an access technology in the access technology priority list of the first terminal and an access technology in the access technology priority list of the second terminal are used to access a same public land mobile network.

When the communication apparatus 1300 is configured to implement functions of the second network element (for example, a UDM) in the method embodiment shown in FIG. 13,
the processing unit is configured to: when a first terminal is associated with a second terminal, determine a subscribed radio access technology/frequency selection priority index of the first terminal and a subscribed radio access technology/frequency selection priority index of the second terminal, where the subscribed radio access technology/frequency selection priority index of the first terminal is different from the subscribed radio access technology/frequency selection priority index of the second terminal; and
the transceiver unit is configured to: send the subscribed radio access technology/frequency selection priority index of the first terminal to a third network element, where the third network element is responsible for mobility management or access management of the first terminal; and send the subscribed radio access technology/frequency selection priority index of the second terminal to a fourth network element, where the fourth network element is responsible for mobility management or access management of the second terminal.

When the communication apparatus 1300 is configured to implement functions of the second network element (for example, a UDM) in the method embodiment shown in FIG. 10,
the transceiver unit is configured to receive first information from a third network element, where the first information indicates a first radio access technology/frequency selection priority index and/or a first access type, the first radio access technology/frequency selection priority index is a radio access technology/frequency selection priority index determined by the third network element for a first terminal, the first access type is an access type corresponding to an access network device accessed by the first terminal, and the third network element is responsible for mobility management or access management of the first terminal;
the processing unit is configured to: when the first terminal is associated with a second terminal, determine a subscribed radio access technology/frequency selection priority index of the second terminal based on the first information; and
the transceiver unit is configured to send the subscribed radio access technology/frequency selection priority index of the second terminal to a fourth network element, where the fourth network element is responsible for mobility management or access management of the second terminal.

In a possible design, the processing unit is configured to: when the subscribed radio access technology/frequency selection priority index of the second terminal is determined based on the first information, update an initial subscribed radio access technology/frequency selection priority index of the second terminal based on the first information, to determine the subscribed radio access technology/frequency selection priority index of the second terminal.

In a possible design, the first information indicates the first radio access technology/frequency selection priority index. Sixth indication information is sent to the third network element, where the sixth indication information is used to request the first information.

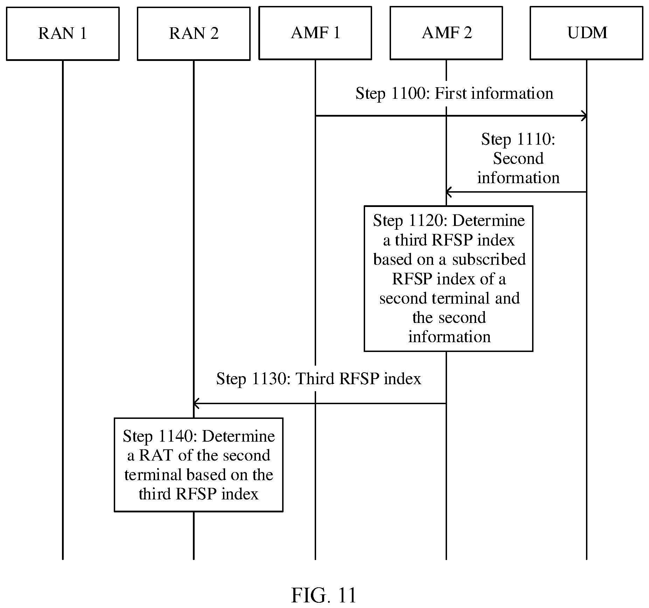

When the communication apparatus 1300 is configured to implement functions of the second network element (for example, a UDM) in the method embodiment shown in FIG. 11,
the transceiver unit is configured to receive and send information. The processing unit is configured to: by using the transceiver unit, receive first information from a third network element, where the first information indicates a first radio access technology/frequency selection priority index and/or a first access type, the first radio access technology/frequency selection priority index is a radio access technology/frequency selection priority index determined by the third network element for a first terminal, the first access type is an access type corresponding to an access network device accessed by the first terminal, and the third network element is responsible for mobility management or access management of the first terminal; and when the first terminal is associated with a second terminal, send second information to a fourth network element, where the second information includes third information and/or a subscribed radio access technology/frequency selection priority index of the first terminal, and the third information is determined based on the first radio access technology/frequency selection priority index and/or the first access type; or the second information includes at least one of the first radio access technology/frequency selection priority index, the first access type, or a subscribed radio access technology/frequency selection priority index of the first terminal, and the fourth network element is responsible for mobility management or access management of the second terminal.

In a possible design, the transceiver unit is configured to: receive fourth information from the fourth network element, where the fourth information indicates a second radio access technology/frequency selection priority index and/or a second access type, the second radio access technology/frequency selection priority index is a radio access technology/frequency selection priority index determined by the fourth network element for the second terminal, and the second access type is an access type corresponding to an access network device accessed by the second terminal; and send the second information to the fourth network element when the first terminal is associated with the second terminal, and the first radio access technology/frequency selection priority is the same as the second radio access technology/frequency selection priority index and/or the first access type is the same as the second access type.

In a possible design, the transceiver unit is configured to send the subscribed radio access technology/frequency selection priority index of the second terminal to the fourth network element.

In a possible design, the third information is determined based on the first radio access technology/frequency selection priority index and/or the first access type. If the first information includes the first access type, the third information includes a fourth access type, and the fourth access type is different from the first access type; and/or if the first information includes the first radio access technology/frequency selection priority index, the third information includes a fourth radio access technology/frequency selection priority index, and the fourth radio access technology/frequency selection priority index is different from the first radio access technology/frequency selection priority index.

In a possible design, the transceiver unit is configured to send first indication information to the fourth network element. The first indication information indicates that the first terminal is associated with the second terminal.

When the communication apparatus 1300 is configured to implement functions of the fourth network element (for example, an AMF 2) in the method embodiment shown in FIG. 11,
the transceiver unit is configured to receive second information from a second network element, where the second information includes third information and/or a subscribed radio access technology/frequency selection priority index of a first terminal, and the third information is determined based on a first radio access technology/frequency selection priority index and/or a first access type; or the second information includes at least one of a first radio access technology/frequency selection priority index, a first access type, or a subscribed radio access technology/frequency selection priority index of a first terminal, where the first radio access technology/frequency selection priority index is a radio access technology/frequency selection priority index determined by a third network element for the first terminal, the first access type is an access type corresponding to an access network device accessed by the first terminal, and the third network element is responsible for mobility management or access management of the first terminal;
the processing unit is configured to determine a third radio access technology/frequency selection priority index based on a subscribed radio access technology/frequency selection priority index of the second terminal and the second information; and
the transceiver unit is configured to send the third radio access technology/frequency selection priority index to an access network device accessed by the second terminal.

In a possible design, the transceiver unit is configured to receive first indication information from the second network element. The first indication information indicates that the first terminal is associated with the second terminal. The processing unit is configured to: when the third radio access technology/frequency selection priority index is determined based on the subscribed radio access technology/frequency selection priority index of the second terminal and the second information, determine the third radio access technology/frequency selection priority index based on the first indication information, the subscribed radio access technology/frequency selection priority index of the second terminal, and the second information.

In a possible design, the third information is determined based on the first radio access technology/frequency selection priority index and/or the first access type. The third information includes a fourth access type, and the fourth access type is different from the first access type; and/or the third information includes a fourth radio access technology/frequency selection priority index, and the fourth radio access technology/frequency selection priority index is different from the first radio access technology/frequency selection priority index.

In a possible design, the transceiver unit is configured to receive the subscribed radio access technology/frequency selection priority index of the second terminal from the second network element.

In a possible design, the transceiver unit is configured to send fourth information to the second network element. The fourth information indicates a second radio access technology/frequency selection priority index and/or a second access type. The second radio access technology/frequency selection priority index is a radio access technology/frequency selection priority index determined by the fourth network element for the second terminal. The second access type is an access type corresponding to an access network device accessed by the second terminal.

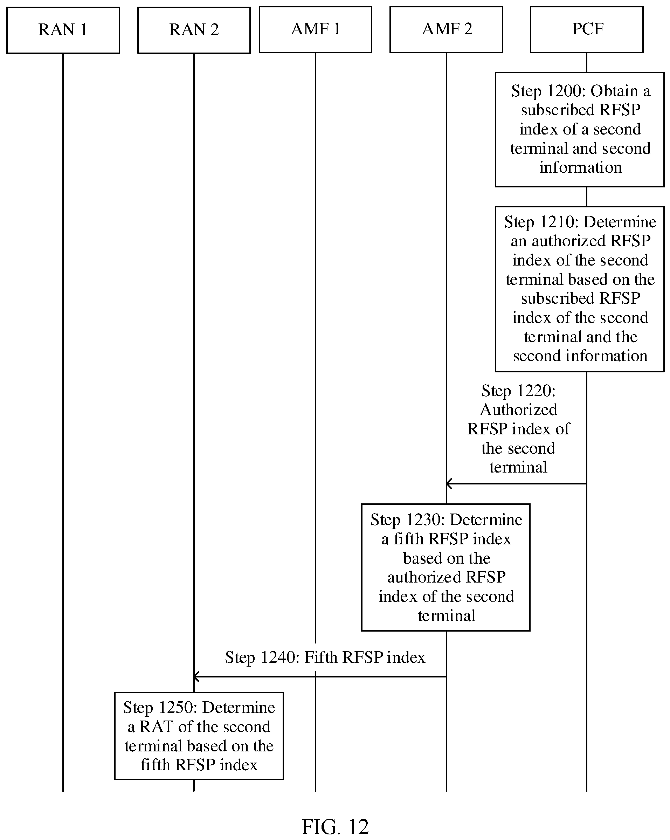

When the communication apparatus 1300 is configured to implement functions of the fifth network element (for example, a PCF) in the method embodiment shown in FIG. 12,
the transceiver unit is configured to obtain a subscribed radio access technology/frequency selection priority index of a second terminal and second information, where the second information includes third information and/or a subscribed radio access technology/frequency selection priority index of a first terminal, and the third information is determined based on a first radio access technology/frequency selection priority index and/or a first access type; or the second information includes at least one of a first radio access technology/frequency selection priority index, a first access type, or a subscribed radio access technology/frequency selection priority index of a first terminal, where the first radio access technology/frequency selection priority index is a radio access technology/frequency selection priority index determined by a third network element for the first terminal, the first access type is an access type corresponding to an access network device accessed by the first terminal, and the third network element is responsible for mobility management or access management of the first terminal;
the processing unit is configured to determine an authorized radio access technology/frequency selection priority index of the second terminal based on the subscribed radio access technology/frequency selection priority index of the second terminal and the second information; and
the transceiver unit is configured to send the authorized radio access technology/frequency selection priority index of the second terminal to a fourth network element, where the fourth network element is responsible for mobility management or access management of the second terminal.

In a possible design, the transceiver unit is configured to receive first indication information from the second network element. The first indication information indicates that the first terminal is associated with the second terminal.

The processing unit is configured to: when determining the authorized radio access technology/frequency selection priority index of the second terminal based on the subscribed radio access technology/frequency selection priority index of the second terminal and the second information, determine the authorized radio access technology/frequency selection priority index of the second terminal based on the first indication information, the subscribed radio access technology/frequency selection priority index of the second terminal, and the second information.

In a possible design, the third information is determined based on the first radio access technology/frequency selection priority index and/or the first access type. If the first information includes the first access type, the third information includes a fourth access type, and the fourth access type is different from the first access type; and/or if the first information includes the first radio access technology/frequency selection priority index, the third information includes a fourth radio access technology/frequency selection priority index, and the fourth radio access technology/frequency selection priority index is different from the first radio access technology/frequency selection priority index.

In a possible design, the transceiver unit is configured to: when obtaining the subscribed radio access technology/frequency selection priority index of the second terminal and the second information, receive the subscribed radio access technology/frequency selection priority index of the second terminal and the second information from the fourth network element.

In a possible design, the transceiver unit is configured to: when obtaining the subscribed radio access technology/frequency selection priority index of the second terminal and the second information, receive the subscribed radio access technology/frequency selection priority index of the second terminal from the fourth network element, and receive the second information from the second network element. The second network element is used for data management of the second terminal.

For more detailed descriptions of the processing unit 1310 and the transceiver unit 1320, directly refer to related descriptions in the foregoing method embodiments for direct obtaining. Details are not described herein again.

As shown in FIG. 14, the communication apparatus 1400 includes a processor 1410 and an interface circuit 1420. The processor 1410 and the interface circuit 1420 are coupled to each other. It can be understood that the interface circuit 1420 may be a transceiver or an input/output interface. Optionally, the communication apparatus 1400 may further include a memory 1430, configured to: store instructions to be executed by the processor 1410, store input data required for running instructions by the processor 1410, or store data generated after the processor 1410 runs instructions.

When the communication apparatus 1400 is configured to implement the methods shown in FIG. 4 to FIG. 12, the processor 1410 is configured to implement functions of the processing unit 1310, and the interface circuit 1420 is configured to implement functions of the transceiver unit 1320.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

This application provides another example of an apparatus. A notification apparatus includes at least one processor and at least one memory. The at least one processor is coupled to the at least one memory. The at least one memory is configured to store instructions. When the instructions are executed by the at least one processor, the communication apparatus is caused to perform the method in the foregoing embodiments. For example, the communication apparatus includes one processor and one memory. As shown in FIG. 14, the communication apparatus 1400 includes one processor 1410 and one memory 1430. The processor 1410 is coupled to the memory 1430. The memory 1430 stores instructions. When the instructions stored in the memory 1430 are executed by the processor 1410, the communication apparatus 1400 performs the method performed by each device in the foregoing embodiments.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be disposed in the foregoing devices. The processor and the storage medium may alternatively exist in each device as discrete components.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, a user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

## Claims

1. A communication method, applied to a first network element, wherein the method comprises:
receiving a first request message from a second network element, wherein the first request message is used to request network selection information of a first terminal, the first request message comprises an identifier of the first terminal and first indication information, and the first indication information indicates that the first terminal is associated with a second terminal;
determining a public land mobile network priority list of the first terminal based on the first indication information and a public land mobile network priority list of the second terminal, or determining a public land mobile network priority list of the first terminal based on the first indication information and an identifier of a second public land mobile network, wherein the second public land mobile network serves the second terminal; and
sending a first response message to the second network element, wherein the first response message comprises the public land mobile network priority list of the first terminal.

2. The method according to claim 1, wherein before determining the public land mobile network priority list of the first terminal based on the first indication information and the identifier of the second public land mobile network, the method further comprises:
receiving the identifier of the second public land mobile network from the second network element.

3. A communication method, applied to a second network element, wherein the method comprises:
sending a first request message to a first network element, wherein the first request message is used to request network selection information of a first terminal, the first request message comprises an identifier of the first terminal and first indication information, and the first indication information indicates that the first terminal is associated with a second terminal; and
receiving a first response message from the first network element, wherein the first response message comprises a public land mobile network priority list of the first terminal.

4. The method according to claim 3, further comprising:
sending an identifier of a second public land mobile network to the first network element, wherein the second public land mobile network serves the second terminal.

5. The method according to claim 3 or 4, wherein sending the first request message to the first network element comprises:
when a first public land mobile network is the same as the second public land mobile network, sending the first request message to the first network element, wherein
the first public land mobile network serves the first terminal, and the second public land mobile network serves the second terminal.

6. A communication method, applied to a second network element, wherein the method comprises:
sending a public land mobile network priority list of a first terminal to a third network element, wherein the third network element is responsible for mobility management or access management of the first terminal; and
when the first terminal is associated with a second terminal, sending second indication information to the third network element, wherein the second indication information indicates that the first terminal selects a public land mobile network different from a public land mobile network selected by the second terminal, and the public land mobile network selected by the first terminal belongs to the public land mobile network priority list of the first terminal.

7. The method according to claim 6, further comprising:
sending third indication information to a fourth network element, wherein the third indication information indicates that the second terminal preferentially selects the public land mobile network, or indicates that the second terminal is a primary terminal in a first device, the first terminal and the second terminal are comprised in the first device, and the fourth network element is responsible for mobility management or access management of the second terminal.

8. A communication method, applied to a first device, wherein the first device comprises a first terminal and a second terminal, and the method comprises:
receiving a public land mobile network priority list of the first terminal and second indication information, wherein the second indication information indicates that the first terminal selects a public land mobile network different from a public land mobile network selected by the second terminal; and
determining a first public land mobile network from the public land mobile network priority list of the first terminal based on the second indication information and an identifier of a second public land mobile network, wherein the second public land mobile network is a public land mobile network selected by the second terminal, or the second public land mobile network serves the second terminal, and the first public land mobile network is different from the second public land mobile network.

9. The method according to claim 8, further comprising:
receiving fourth indication information, wherein the fourth indication information indicates whether the first public land mobile network supports a DualSteer capability; and
when the fourth indication information indicates that the first public land mobile network does not support the DualSteer capability, determining a third public land mobile network from the public land mobile network priority list of the first terminal, wherein the third public land mobile network is different from the second public land mobile network and is different from the first public land mobile network.

10. The method according to claim 8 or 9, further comprising:
receiving third indication information, wherein the third indication information indicates that the second terminal preferentially selects the public land mobile network, or indicates that the second terminal is a primary terminal in the first device;
receiving a public land mobile network priority list of the second terminal; and
selecting the second public land mobile network from the public land mobile network priority list of the second terminal based on the third indication information.

11. A communication method, applied to a second network element, wherein the method comprises:
sending fifth indication information to a third network element when the first terminal is associated with a second terminal and a first public land mobile network is the same as a second public land mobile network, wherein the first public land mobile network serves the first terminal, the second public land mobile network serves the second terminal, and the fifth indication information indicates that the first terminal reselects a public land mobile network, and/or indicates a type of a public land mobile network selected by the first terminal.

12. The method according to claim 11, wherein the type of the public land mobile network is a visited public land mobile network or an equivalent public land mobile network.

13. A communication method, applied to a first terminal, wherein the method comprises:
receiving fifth indication information, wherein the fifth indication information indicates that the first terminal reselects a public land mobile network, and/or indicates a type of a public land mobile network selected by the first terminal; and
determining a fourth public land mobile network in a public land mobile network priority list of the first terminal based on the fifth indication information.

14. The method according to claim 13, wherein the type of the public land mobile network is a visited public land mobile network or an equivalent public land mobile network.

15. A communication method, applied to a second network element, wherein the method comprises:
receiving first information from a third network element, wherein the first information indicates a first radio access technology/frequency selection priority index and/or a first access type, the first radio access technology/frequency selection priority index is a radio access technology/frequency selection priority index determined by the third network element for a first terminal, the first access type is an access type corresponding to an access network device accessed by the first terminal, and the third network element is responsible for mobility management or access management of the first terminal; and
when the first terminal is associated with a second terminal, sending second information to a fourth network element, wherein the second information comprises third information and/or a subscribed radio access technology/frequency selection priority index of the first terminal, and the third information is determined based on the first radio access technology/frequency selection priority index and/or the first access type; or the second information comprises at least one of the first radio access technology/frequency selection priority index, the first access type, or a subscribed radio access technology/frequency selection priority index of the first terminal, and the fourth network element is responsible for mobility management or access management of the second terminal.

16. The method according to claim 15, further comprising:
receiving fourth information from the fourth network element, wherein the fourth information indicates a second radio access technology/frequency selection priority index and/or a second access type, the second radio access technology/frequency selection priority index is a radio access technology/frequency selection priority index determined by the fourth network element for the second terminal, and the second access type is an access type corresponding to an access network device accessed by the second terminal; and
when the first terminal is associated with the second terminal, sending the second information to the fourth network element, wherein the method further comprises:
sending the second information to the fourth network element when the first terminal is associated with the second terminal, and the first radio access technology/frequency selection priority is the same as the second radio access technology/frequency selection priority index and/or the first access type is the same as the second access type.

17. The method according to claim 15 or 16, further comprising:
sending a subscribed radio access technology/frequency selection priority index of the second terminal to the fourth network element.

18. The method according to any one of claims 15 to 17, wherein the third information is determined based on the first radio access technology/frequency selection priority index and/or the first access type, and the method comprises:
if the first information comprises the first access type, the third information comprises a fourth access type, and the fourth access type is different from the first access type; and/or
if the first information comprises the first radio access technology/frequency selection priority index, the third information comprises a fourth radio access technology/frequency selection priority index, and the fourth radio access technology/frequency selection priority index is different from the first radio access technology/frequency selection priority index.

19. The method according to any one of claims 15 to 18, further comprising:
sending first indication information to the fourth network element, wherein the first indication information indicates that the first terminal is associated with the second terminal.

20. A communication method, applied to a fourth network element, wherein the method comprises:
receiving second information from a second network element, wherein the second information comprises third information and/or a subscribed radio access technology/frequency selection priority index of a first terminal, and the third information is determined based on a first radio access technology/frequency selection priority index and/or a first access type; or the second information comprises at least one of a first radio access technology/frequency selection priority index, a first access type, or a subscribed radio access technology/frequency selection priority index of a first terminal, wherein the first radio access technology/frequency selection priority index is a radio access technology/frequency selection priority index determined by a third network element for the first terminal, the first access type is an access type corresponding to an access network device accessed by the first terminal, and the third network element is responsible for mobility management or access management of the first terminal;
determining a third radio access technology/frequency selection priority index based on a subscribed radio access technology/frequency selection priority index of the second terminal and the second information; and
sending the third radio access technology/frequency selection priority index to an access network device accessed by the second terminal.

21. The method according to claim 20, wherein the method further comprises:
receiving first indication information from the second network element, wherein the first indication information indicates that the first terminal is associated with the second terminal; and
determining the third radio access technology/frequency selection priority index based on the subscribed radio access technology/frequency selection priority index of the second terminal and the second information comprises:
determining the third radio access technology/frequency selection priority index based on the first indication information, the subscribed radio access technology/frequency selection priority index of the second terminal, and the second information.

22. The method according to claim 20 or 21, wherein the third information is determined based on the first radio access technology/frequency selection priority index and/or the first access type, and the method comprises:
the third information comprises a fourth access type, and the fourth access type is different from the first access type; and/or
the third information comprises a fourth radio access technology/frequency selection priority index, and the fourth radio access technology/frequency selection priority index is different from the first radio access technology/frequency selection priority index.

23. The method according to any one of claims 20 to 22, further comprising:
receiving the subscribed radio access technology/frequency selection priority index of the second terminal from the second network element.

24. The method according to any one of claims 20 to 23, further comprising:
sending fourth information to the second network element, wherein the fourth information indicates a second radio access technology/frequency selection priority index and/or a second access type, the second radio access technology/frequency selection priority index is a radio access technology/frequency selection priority index determined by the fourth network element for the second terminal, and the second access type is an access type corresponding to an access network device accessed by the second terminal.

25. A communication apparatus, comprising a unit or a module configured to perform the method according to any one of claims 1 to 24.

26. A communication apparatus, wherein the communication apparatus comprises at least one processor, and the at least one processor is configured to perform the method according to any one of claims 1 to 24.

27. A computer-readable storage medium, wherein the computer-readable storage medium comprises a program, and when the program runs on an apparatus, the apparatus is enabled to perform the method according to any one of claims 1 to 24.

28. A computer program product, wherein the computer program product comprises a program or instructions, and when the program or the instructions are executed by an apparatus, the apparatus is enabled to perform the method according to any one of claims 1 to 24.
